(19) **Europäisches Patentamt / European Patent Office / Office européen des brevets**

(11) **EP 3 943 824 B1**

(12) **EUROPEAN PATENT SPECIFICATION**

(45) Date of publication and mention
of the grant of the patent:
**08.11.2023 Bulletin 2023/45**

(21) Application number: **20773873.3**

(22) Date of filing: **17.03.2020**

(51) International Patent Classification (IPC):
*F24F 11/32* (2018.01)     *F24F 11/38* (2018.01)
*F24F 11/49* (2018.01)     *F24F 11/62* (2018.01)
*F24F 11/36* (2018.01)

(52) Cooperative Patent Classification (CPC):
**F24F 11/61; F24F 11/32; F24F 11/36; F24F 11/38;
F24F 11/42; F24F 11/49; F24F 11/62; F24F 11/86;
F25B 13/00; F25B 47/025; F25B 49/02;**
F24F 11/65; F24F 2110/10; F24F 2110/20;
F24F 2140/20;                                    (Cont.)

(86) International application number:
**PCT/JP2020/011840**

(87) International publication number:
**WO 2020/189693 (24.09.2020 Gazette 2020/39)**

(54) **DEVICE EVALUATION SYSTEM AND DEVICE EVALUATION METHOD**

VORRICHTUNGSBEURTEILUNGSSYSTEM UND VORRICHTUNGSBEURTEILUNGSVERFAHREN

SYSTÈME D'ÉVALUATION DE DISPOSITIF ET PROCÉDÉ D'ÉVALUATION DE DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2019 JP 2019051639**

(43) Date of publication of application:
**26.01.2022 Bulletin 2022/04**

(73) Proprietor: **DAIKIN INDUSTRIES, LTD.**
**Osaka-Shi, Osaka 530-0001 (JP)**

(72) Inventors:
• **FUJIMOTO, Shuji**
  **Osaka-shi, Osaka 530-8323 (JP)**
• **INAO, Akihiro**
  **Osaka-shi, Osaka 530-8323 (JP)**
• **SADAI, Shizuka**
  **Osaka-shi, Osaka 530-8323 (JP)**

• **KASAHARA, Shinichi**
  **Osaka-shi, Osaka 530-8323 (JP)**

(74) Representative: **Conti, Marco**
  **Bugnion S.p.A.**
  **Via di Corticella, 87**
  **40128 Bologna (IT)**

(56) References cited:
  **EP-A2- 2 682 685        WO-A1-2018/163402
  JP-A- 2001 317 790      JP-A- 2006 078 043
  JP-A- 2006 292 212      JP-A- 2006 292 213
  US-A1- 2017 292 725**

EP 3 943 824 B1

(52) Cooperative Patent Classification (CPC): (Cont.)
F25B 2313/0294; F25B 2313/0314;
F25B 2313/0315; F25B 2400/06; F25B 2600/0253;
F25B 2600/111; F25B 2600/2513; F25B 2700/2104;
F25B 2700/2106; F25B 2700/21151;
F25B 2700/21152; Y02B 30/70

**Description**

**TECHNICAL FIELD**

The present invention relates to an apparatus evaluation system for evaluating an air conditioning apparatus and an evaluation method for the air conditioning apparatus.

**BACKGROUND ART**

As disclosed in PTL 1 (Japanese Patent No. 5334909), there has been a technique for operating an air conditioning apparatus to enter a predetermined operating state (this operation is referred to herein as an evaluation operation) and evaluating the air conditioning apparatus on the basis of a predetermined index in the evaluation operation. PTL 1 (Japanese Patent No. 5334909) discloses that an air conditioning apparatus is evaluated in order to sense an insufficient amount of refrigerant at the time of filling with refrigerant or the like in the initial stage of installation of the air conditioning apparatus.

Another example of known device evaluation systems is disclosed by patent document EP2682685A2.

**SUMMARY OF INVENTION**

< Technical Problem >

Such an evaluation technique for an air conditioning apparatus may be used to evaluate the air conditioning apparatus in the initial stage of installation of the air conditioning apparatus, and to re-evaluate the air conditioning apparatus after the time has passed. In re-evaluation, however, it is difficult to set the thermal load during the evaluation operation to be the same as that in the initial stage of installation of the air conditioning apparatus. For this reason, re-evaluation is typically performed based on an evaluation operation performed under a different thermal load.

However, since a difference in thermal load has a considerable influence on the accuracy of the evaluation, it is preferable that the thermal load during the evaluation operation in the initial stage of installation of the air conditioning apparatus and the thermal load during the evaluation operation performed at the time of the subsequent re-evaluation have values as close as possible.

< Solution to Problem >

Aim of the present invention is to provide an apparatus evaluation system and an apparatus evaluation method which improve the state of the art indicated above. This aim is achieved by the apparatus evaluation system and the apparatus evaluation method according to the corresponding appended claims.

An apparatus evaluation system according to a first aspect of the invention is set out in claim 1.

In the apparatus evaluation system according to the first aspect, the conditions of the thermal load at the time of evaluation in the initial stage of installation of the air conditioning apparatus and the conditions of the thermal load at the time of evaluation after a lapse of time from the installation of the air conditioning apparatus can be brought close to each other, and the air conditioning apparatus can be accurately evaluated.

An apparatus evaluation system according to a second aspect of the invention is the apparatus evaluation system according to the first aspect, in which the evaluation of the first air conditioning apparatus includes at least one of evaluation of an amount of refrigerant, evaluation of a performance, and evaluation of a failure of the first air conditioning apparatus.

The apparatus evaluation system according to the second aspect can perform accurate evaluation for various contents of evaluation.

An apparatus evaluation system according to a third aspect of the invention is the apparatus evaluation system according to the first aspect or the second aspect, in which the first air conditioning control unit operates the second air conditioning apparatus before at least one of the first operation and the second operation of the first air conditioning apparatus is performed and/or while at least one of the first operation and the second operation of the first air conditioning apparatus is being performed to bring a temperature of the first space close to a target temperature and/or bring a humidity of the first space close to a target humidity.

In the apparatus evaluation system according to the third aspect, the temperature or humidity of the first space at the time of evaluation in the initial stage of installation of the air conditioning apparatus and the temperature or humidity of the first space at the time of evaluation after a lapse of time from the installation of the air conditioning apparatus can be brought close to each other, and the air conditioning apparatus can be accurately evaluated.

An apparatus evaluation system according to a fourth aspect of the invention is the apparatus evaluation system according to any one of the first to third aspects, in which the first air conditioning apparatus and the second air conditioning apparatus are vapor compression air conditioning apparatuses each having a use unit installed in the first space.

An apparatus evaluation system according to a fifth aspect of the invention is the apparatus evaluation system according to any one of the first to fourth aspects, in which the second evaluation process is repeatedly performed when a first period has elapsed since the first evaluation process and when the first period has elapsed since the second evaluation process previously performed.

In the apparatus evaluation system according to the fifth aspect, the air conditioning apparatus can be periodically evaluated with high accuracy.

An apparatus evaluation system according to a sixth aspect of the invention is the apparatus evaluation system according to any one of the first to fifth aspects, including a second evaluation unit and a second air conditioning control unit. The second evaluation unit evaluates the second air conditioning apparatus based on a predetermined second evaluation index obtained in a second evaluation operation in which the second air conditioning apparatus is operated in a predetermined operating state. The second air conditioning control unit controls the first air conditioning apparatus. The second evaluation unit performs a third evaluation process and a fourth evaluation process. In the third evaluation process, the second evaluation unit evaluates the second air conditioning apparatus based on the second evaluation index obtained in a third operation performed as the second evaluation operation at a time of installation of the second air conditioning apparatus. In the fourth evaluation process, the second evaluation unit evaluates the second air conditioning apparatus based on the second evaluation index obtained in a fourth operation performed as the second evaluation operation after the third evaluation process. The second air conditioning control unit operates the first air conditioning apparatus before at least one of the third operation and the fourth operation of the second air conditioning apparatus is performed and/or while at least one of the third operation and the fourth operation of the second air conditioning apparatus is being performed.

In the apparatus evaluation system according to the sixth aspect, also for the second air conditioning apparatus, the conditions of the thermal load at the time of evaluation in the initial stage of installation of the air conditioning apparatus and the conditions of the thermal load at the time of evaluation after a lapse of time from the installation of the air conditioning apparatus can be brought close to each other, and the air conditioning apparatus can be accurately evaluated.

An apparatus evaluation method according to a seventh aspect of the invention is set out in method claim 7.

In the apparatus evaluation method according to the seventh aspect, the conditions of the thermal load at the time of evaluation in the initial stage of installation of the air conditioning apparatus and the conditions of the thermal load at the time of evaluation after a lapse of time from the installation of the air conditioning apparatus can be brought close to each other, and the air conditioning apparatus can be accurately evaluated.

## BRIEF DESCRIPTION OF DRAWINGS

[Fig. 1] Fig. 1 is a diagram schematically illustrating an air conditioning system including a first air conditioning apparatus and a second air conditioning apparatus that are evaluation targets of an apparatus evaluation system according to an embodiment of the present invention.

[Fig. 2] Fig. 2 is a schematic configuration diagram of the first air conditioning apparatus and the second air conditioning apparatus in the air conditioning system in Fig. 1.

[Fig. 3] Fig. 3 is a block diagram of an apparatus evaluation system according to an embodiment of the present invention.

[Fig. 4A] Fig. 4A is an example of a flowchart for evaluating a first air conditioning apparatus at the time of installation of the first air conditioning apparatus, by using the apparatus evaluation system in Fig. 3.

[Fig. 4B] Fig. 4B is an example of a flowchart for evaluating the first air conditioning apparatus by using the apparatus evaluation system in Fig. 3, which is performed after the first evaluation process.

[Fig. 5A] Fig. 5A is another example of the flowchart for evaluating the first air conditioning apparatus at the time of installation of the first air conditioning apparatus, by using the apparatus evaluation system in Fig. 3.

[Fig. 5B] Fig. 5B is another example of evaluating the first air conditioning apparatus by using the apparatus evaluation system in Fig. 3, which is performed after the first evaluation process.

[Fig. 6A] Fig. 6A is still another example of the flowchart for evaluating the first air conditioning apparatus at the time of installation of the first air conditioning apparatus, by using the apparatus evaluation system in Fig. 3.

[Fig. 6B] Fig. 6B is still another example of the flowchart for evaluating the first air conditioning apparatus by using the apparatus evaluation system in Fig. 3, which is performed after the first evaluation process.

## DESCRIPTION OF EMBODIMENTS

An apparatus evaluation system 200 according to an embodiment of the present invention and an evaluation method for an air conditioning apparatus, which is performed by the apparatus evaluation system 200, will be described with reference to the drawings.

(1) Overall Configuration

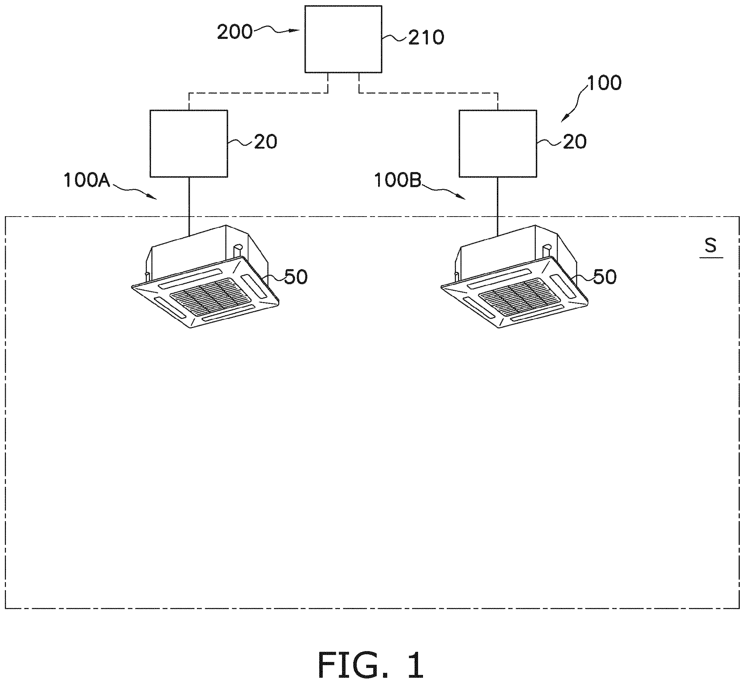

An overview of the apparatus evaluation system 200 according to an embodiment of the present disclosure, and a first air conditioning apparatus 100A and a second air conditioning apparatus 100B, which are targets to be evaluated by the apparatus evaluation system 200, will be described with reference to Fig. 1 to Fig. 3.

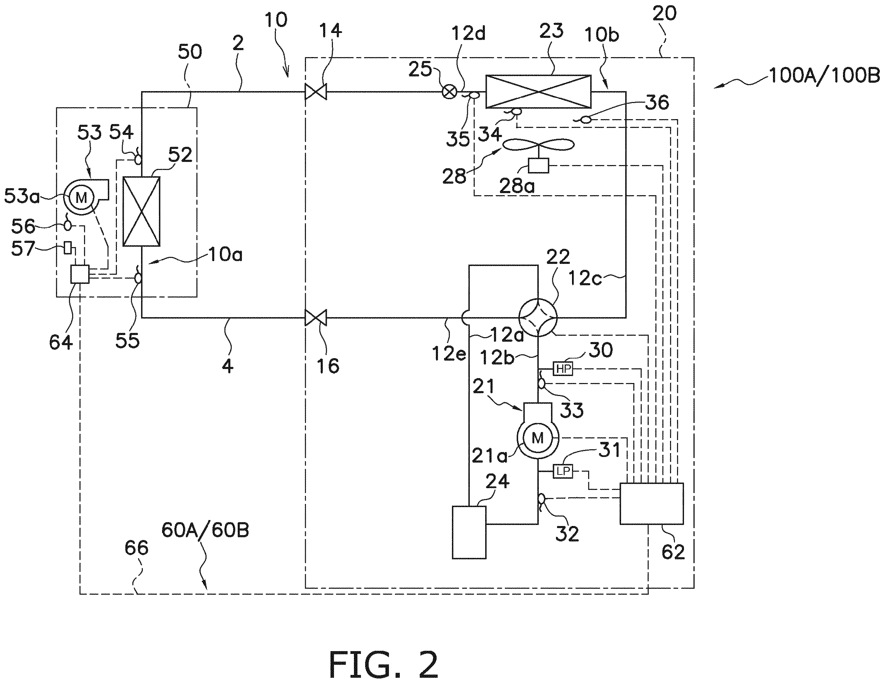

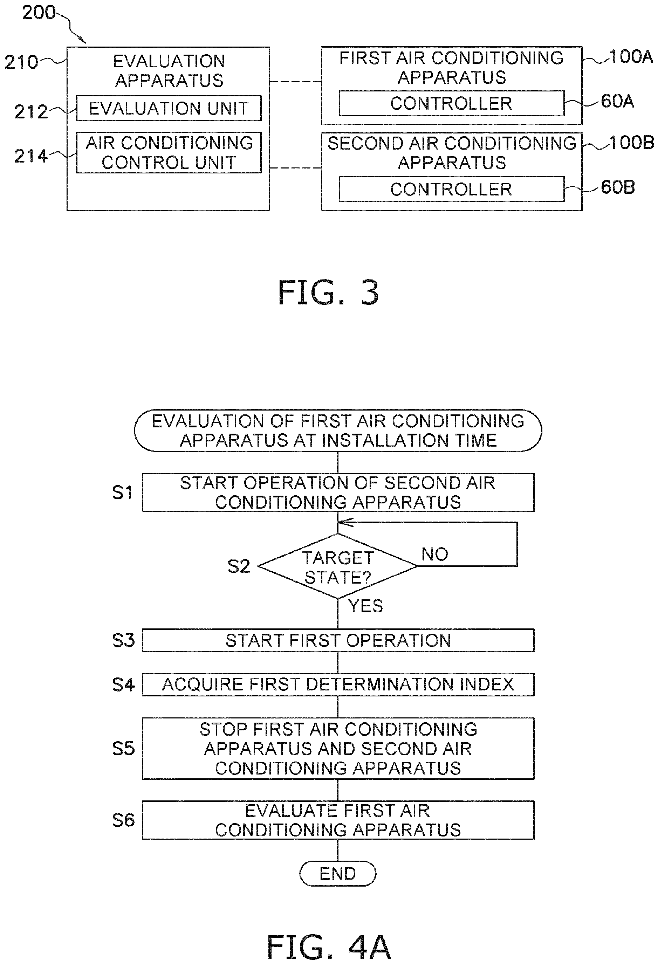

Fig. 1 is a diagram schematically illustrating an air conditioning system 100 including the first air conditioning apparatus 100A and the second air conditioning apparatus 100B, which are evaluation targets of the apparatus evaluation system 200. Fig. 2 is a schematic configuration diagram of the first air conditioning apparatus 100A and the second air conditioning apparatus 100B. Fig. 3 is a block diagram of the apparatus evaluation system 200.

The air conditioning system 100 mainly includes the first air conditioning apparatus 100A and the second air conditioning apparatus 100B. In this embodiment, both the first air conditioning apparatus 100A and the second air conditioning apparatus 100B are vapor compression air conditioning apparatuses. The first air conditioning apparatus 100A and the second air conditioning apparatus 100B are air conditioning apparatuses that perform cooling (including dehumidification) and heating of a space S. However, the first air conditioning apparatus 100A and the second air conditioning apparatus 100B may not be air conditioning apparatuses capable of cooling and heating. For example, the first air conditioning apparatus 100A and the second air conditioning apparatus 100B may be air conditioning apparatuses dedicated to cooling.

In this embodiment, the first air conditioning apparatus 100A and the second air conditioning apparatus 100B have the same structure and specifications. Thus, in the following description and drawings, for simplicity of description, the same reference numerals are used for components, devices, and the like constituting the first air conditioning apparatus 100A and the second air conditioning apparatus 100B, except for reference numeral 60A indicating a controller of the first air conditioning apparatus 100A and reference numeral 60B indicating a controller of the second air conditioning apparatus 100B. Different reference numerals are used for the controller 60A of the first air conditioning apparatus 100A and the controller 60B of the second air conditioning apparatus 100B, for convenience of description, and both of the controllers 60A and 60B have the same function.

The first air conditioning apparatus 100A and the second air conditioning apparatus 100B may not have the same structure or specifications. The first air conditioning apparatus 100A and the second air conditioning apparatus 100B may have different structures or specifications.

The first air conditioning apparatus 100A and the second air conditioning apparatus 100B are air conditioning apparatuses intended to perform air conditioning of the same space S. In other words, both a use unit 50 of the first air conditioning apparatus 100A and a use unit 50 of the second air conditioning apparatus 100B are installed in the space S. The Expression that the use units 50 of the air conditioning apparatuses 100A and 100B are installed in the same space S means that a location where the use unit 50 of the air conditioning apparatus 100A is installed and a location where the use unit 50 of the air conditioning apparatus 100B is installed are not separated by a wall or the like.

While two air conditioning apparatuses are installed in the same space S in this embodiment, the number of air conditioning apparatuses installed in the space S is not limited to two. Three or more air conditioning apparatuses may be installed in the space S.

The apparatus evaluation system 200 is a system that evaluates at least one of the first air conditioning apparatus 100A and the second air conditioning apparatus 100B. In this embodiment, the apparatus evaluation system 200 is a system that evaluates both the first air conditioning apparatus 100A and the second air conditioning apparatus 100B. In a case where three or more air conditioning apparatuses are installed in the space S, the apparatus evaluation system 200 is a system that evaluates at least some of the three or more air conditioning apparatuses.

The apparatus evaluation system 200 mainly includes an evaluation apparatus 210 having a function of evaluating the first air conditioning apparatus 100A and the second air conditioning apparatus 100B. The evaluation apparatus 210 is a computer installed at a site where the air conditioning system 100 is installed. It is preferable that the evaluation apparatus 210 is communicably connected to the first air conditioning apparatus 100A and the second air conditioning apparatus 100B.

The evaluation of the first air conditioning apparatus 100A and the second air conditioning apparatus 100B by the apparatus evaluation system 200 includes at least one of evaluation of the amount of refrigerant, evaluation of the performance, and evaluation of the failure of the first air conditioning apparatus 100A and the second air conditioning apparatus 100B. Specific content of the evaluation will be described below. The apparatus evaluation system 200 may evaluate the first air conditioning apparatus 100A and the second air conditioning apparatus 100B for all the evaluation items described below, or evaluate the first air conditioning apparatus 100A and the second air conditioning apparatus 100B for the content of some of them.

The following describes the detailed configuration of the first air conditioning apparatus 100A, the detailed configuration of the apparatus evaluation system 200, and evaluation of the first air conditioning apparatus 100A by the apparatus evaluation system 200.

(2) Detailed Configuration of First Air Conditioning Apparatus

The detailed configuration of the first air conditioning apparatus 100A will be described. As described above, since the first air conditioning apparatus 100A and the second air conditioning apparatus 100B have the same structure and specifications, the first air conditioning apparatus 100A will be described here while the description of the second air conditioning apparatus 100B will be omitted.

The first air conditioning apparatus 100A mainly includes one heat source unit 20, one use unit 50, a liquid-refrigerant connection pipe 2, a gas-refrigerant connection pipe 4, and the controller 60A (see Fig. 2). The liquid-refrigerant connection pipe 2 and the gas-refrigerant connection pipe 4 are pipes connecting the heat source unit 20 and the use unit 50 (see Fig. 2). The controller 60A controls the operation of various devices or various components of the heat source unit 20 and the use unit 50.

The first air conditioning apparatus 100A according to this embodiment includes one use unit 50, but the number of use units 50 is not limited to one. The first air conditioning apparatus 100A may include two or more use units 50. Also, the first air conditioning apparatus 100A according to this embodiment includes one heat source unit 20, but the number of heat source units 20 is not limited to one. The first air conditioning apparatus 100A may include two or more heat source units 20. Further, the first air conditioning apparatus 100A may be an integral apparatus in which the heat source unit 20 and the use unit 50 are incorporated into a single unit.

The heat source unit 20 and the use unit 50 are connected via the liquid-refrigerant connection pipe 2 and the gas-refrigerant connection pipe 4 to form a refrigerant circuit 10 (see Fig. 2). The refrigerant circuit 10 is filled with refrigerant. The refrigerant with which the refrigerant circuit 10 is filled is, for example but not limited to, fluorocarbon-based refrigerant such as R32. The refrigerant circuit 10 includes a compressor 21, a flow direction switching mechanism 22, a heat-source-side heat exchanger 23, and an expansion mechanism 25 of the heat source unit 20, and a use-side heat exchanger 52 of the use unit 50 (see Fig. 2).

The first air conditioning apparatus 100A has a cooling operating mode for executing a cooling operation, a dehumidification operating mode for executing a dehumidifying operation, and a heating operating mode for executing a heating operation as main operating modes. The cooling operation is an operation in which the heat-source-side heat exchanger 23 is caused to function as a condenser and the use-side heat exchanger 52 is caused to function as an evaporator to cool the air in the space S where the use unit 50 is installed. The dehumidifying operation is an operation in which, like the cooling operation, the heat-source-side heat exchanger 23 is caused to function as a condenser and the use-side heat exchanger 52 is caused to function as an evaporator. Note that the dehumidifying operation is mainly intended to dehumidify the space S. The heating operation is an operation in which the heat-source-side heat exchanger 23 is caused to function as an evaporator and the use-side heat exchanger 52 is caused to function as a condenser to heat the air in the space S where the use unit 50 is installed. During the heating operation, the first air conditioning apparatus 100A interrupts the heating operation and performs a defrosting operation. The defrosting operation is an operation in which the heat-source-side heat exchanger 23 is caused to function as a condenser and the use-side heat exchanger 52 is caused to function as an evaporator to remove frost adhering to the heat-source-side heat exchanger 23. When the apparatus evaluation system 200 evaluates the first air conditioning apparatus 100A, the first air conditioning apparatus 100A performs a predetermined evaluation operation. The specific content of these operations will be described below.

The details of the first air conditioning apparatus 100A will further be described.

(2-1) Use Unit

The use unit 50 is a unit installed in the space S. For example, the use unit 50 is a ceiling-embedded unit. However, the use units 50 of the first air conditioning apparatus 100A and the second air conditioning apparatus 100B are not limited to the ceiling-embedded type, and one or both of them may be of a ceiling-hanging type, a wall-hanging type, or a floor-standing type.

The use unit 50 may be installed in a place other than the space S. For example, the use unit 50 may be installed in an attic, a machine chamber, a garage, or the like. In this case, an air passage is installed for supplying the air heat-exchanged with the refrigerant in the use-side heat exchanger 52 from the use unit 50 to the space S. The air passage is, for example, a duct. However, the type of the air passage is not limited to the duct and is selected as appropriate.

As described above, the use unit 50 is connected to the heat source unit 20 via the liquid-refrigerant connection pipe 2 and the gas-refrigerant connection pipe 4 to form a portion of the refrigerant circuit 10.

The use unit 50 includes a use-side refrigerant circuit 10a that constitutes a portion of the refrigerant circuit 10 (see Fig. 2). The use-side refrigerant circuit 10a mainly includes the use-side heat exchanger 52 (see Fig. 2). The use unit 50 includes a use-side fan 53, which is driven by a fan motor 53a (see Fig. 2). The use unit 50 includes various sensors. In this embodiment, the various sensors included in the use unit 50 include a liquid-side temperature sensor 54, a gas-side temperature sensor 55, a space temperature sensor 56, and a space humidity sensor 57 (see Fig. 2). The use unit 50 includes a use-side controller 64 that controls the operation of the use unit 50 (see Fig. 2).

(2-1-1) Use-Side Heat Exchanger

In the use-side heat exchanger 52, heat exchange is performed between the refrigerant flowing through the use-side heat exchanger 52 and the air in the space S. The use-side heat exchanger 52 is not limited in type, but is, for example, a fin-and-tube heat exchanger having a plurality of heat transfer tubes and fins (not illustrated).

An end of the use-side heat exchanger 52 is connected to the liquid-refrigerant connection pipe 2 via a refrigerant pipe. The other end of the use-side heat exchanger 52 is connected to the gas-refrigerant connection pipe 4 via a refrigerant pipe. During the cooling operation, during the dehumidifying operation, and during the defrosting operation, the refrigerant flows into the use-side heat exchanger 52 from the liquid-refrigerant connection pipe 2 side, and the use-side heat exchanger 52 functions as an evaporator. During the heating operation, the refrigerant flows into the use-side heat exchanger 52 from the gas-refrigerant connection pipe 4 side, and the use-side heat exchanger 52 functions as a condenser.

(2-1-2) Use-Side Fan

The use-side fan 53 is a mechanism that sucks the air in the space S into a casing (not illustrated) of the use unit 50, supplies the air to the use-side heat exchanger 52, and blows out the air heat-exchanged with the refrigerant in the use-side heat exchanger 52 to the space S. The use-side fan 53 is, for example, a turbo fan. However, the type of the use-side fan 53 is not limited to the turbo fan and is selected as appropriate. The use-side fan 53 is driven by the fan motor 53a. The use-side fan 53 is a variable-air-volume fan driven by the fan motor 53a whose number of revolutions can be changed.

(2-1-3) Sensors

The use unit 50 includes sensors, namely, the liquid-side temperature sensor 54, the gas-side temperature sensor 55, the space temperature sensor 56, and the space humidity sensor 57 (see Fig. 2). The types of the temperature sensors and the humidity sensor are selected as appropriate.

The use unit 50 may include only some of the sensors 54 to 57. The use unit 50 may include a sensor other than the sensors 54 to 57.

The liquid-side temperature sensor 54 is disposed in the refrigerant pipe connecting the liquid side of the use-side heat exchanger 52 and the liquid-refrigerant connection pipe 2. The liquid-side temperature sensor 54 measures the temperature of the refrigerant flowing through the refrigerant pipe on the liquid side of the use-side heat exchanger 52.

The gas-side temperature sensor 55 is disposed in the refrigerant pipe connecting the gas side of the use-side heat exchanger 52 and the gas-refrigerant connection pipe 4. The gas-side temperature sensor 55 measures the temperature of the refrigerant flowing through the refrigerant pipe on the gas side of the use-side heat exchanger 52.

The space temperature sensor 56 is disposed on the air suction side of the casing (not illustrated) of the use unit 50. The space temperature sensor 56 detects the temperature (space temperature Tr) of the air in the space S flowing into the casing of the use unit 50.

The space humidity sensor 57 is disposed on the air suction side of the casing (not illustrated) of the use unit 50. The space humidity sensor 57 detects the humidity (space humidity Hr) of the air in the space S flowing into the casing of the use unit 50.

(2-1-4) Use-Side Controller

The use-side controller 64 controls the operation of the components constituting the use unit 50.

The use-side controller 64 includes a microcomputer disposed to control the use unit 50, a memory storing a control program implementable by the microcomputer, and so on. The configuration of the use-side controller 64 described here is merely an example, and the functions of the use-side controller 64 described below may be implemented by software, hardware, or a combination of software and hardware.

The use-side controller 64 is electrically connected to the use-side fan 53, the liquid-side temperature sensor 54, the gas-side temperature sensor 55, the space temperature sensor 56, and the space humidity sensor 57 so as to be capable of exchanging control signals or information (see Fig. 2).

The use-side controller 64 is configured to be capable of receiving various signals transmitted from a remote controller (not illustrated) for operating the use unit 50. The various signals transmitted from the remote controller include a signal for instructing the operation/stop of the use unit 50, and signals related to various settings. The signals related to various settings include, for example, a signal for switching the operating mode, and signals related to a set temperature Trs and a set humidity Hrs of the cooling operation and the heating operation.

The use-side controller 64 is connected to a heat-source-side controller 62 of the heat source unit 20 via a transmission line 66 in such a manner that control signals and the like can be exchanged. The use-side controller 64 and the heat-source-side controller 62 may not be connected by the physical transmission line 66, and may be communicably connected wirelessly. The use-side controller 64 and the heat-source-side controller 62 cooperate with each other to function as the controller 60A that controls the overall operation of the first air conditioning apparatus 100A. The controller 60A will be described below.

(2-2) Heat Source Unit

The heat source unit 20 is disposed outside the space S. For example, the heat source unit 20 is installed on the rooftop of a building in which the first air conditioning apparatus 100A is installed, or adjacent to the building.

The heat source unit 20 is connected to the use unit 50 via the liquid-refrigerant connection pipe 2 and the gas-refrigerant connection pipe 4. The heat source unit 20 constitutes the refrigerant circuit 10 together with the use unit 50 (see Fig. 2).

The heat source unit 20 includes a heat-source-side refrigerant circuit 10b that constitutes a portion of the refrigerant circuit 10 (see Fig. 2). The heat-source-side refrigerant circuit 10b mainly includes the compressor 21, the flow direction switching mechanism 22, the heat-source-side heat exchanger 23, the expansion mechanism 25, an accumulator 24, a liquid-side shutoff valve 14, and a gas-side shutoff valve 16 (see Fig. 2). The heat source unit 20 includes a heat-source-side fan 28, which is driven by a fan motor 28a (see Fig. 2). The heat source unit 20 includes various sensors. The sensors included in the heat source unit 20 will be described below. The heat source unit 20 includes the heat-source-side controller 62 (see Fig. 2).

However, the heat source unit 20 does not need to include all of the constituent elements described above, and the constituent elements of the heat source unit 20 are selected as appropriate. For example, the heat source unit 20 may not include the expansion mechanism 25 as a configuration, and a similar expansion mechanism may be included in the use unit 50 instead of the heat source unit 20.

Further, the heat source unit 20 includes a suction pipe 12a, a discharge pipe 12b, a first gas refrigerant pipe 12c, a liquid refrigerant pipe 12d, and a second gas refrigerant pipe 12e (see Fig. 2).

The suction pipe 12a connects the flow direction switching mechanism 22 and the suction side of the compressor 21 (see Fig. 2). The suction pipe 12a is provided with the accumulator 24 (see Fig. 2).

The discharge pipe 12b connects the discharge side of the compressor 21 and the flow direction switching mechanism 22 (see Fig. 2).

The first gas refrigerant pipe 12c connects the flow direction switching mechanism 22 and the gas side of the heat-source-side heat exchanger 23 (see Fig. 2).

The liquid refrigerant pipe 12d connects the liquid side of the heat-source-side heat exchanger 23 and the liquid-refrigerant connection pipe 2 (see Fig. 2). The liquid refrigerant pipe 12d is provided with the expansion mechanism 25 (see Fig. 2). The liquid-side shutoff valve 14 is disposed at a connection portion between the liquid refrigerant pipe 12d and the liquid-refrigerant connection pipe 2 (see Fig. 2).

The second gas refrigerant pipe 12e connects the flow direction switching mechanism 22 and the gas-refrigerant connection pipe 4 (see Fig. 2). The gas-side shutoff valve 16 is disposed at a connection portion between the second gas refrigerant pipe 12e and the gas-refrigerant connection pipe 4 (see Fig. 2).

The following further describes the main configuration of the heat source unit 20.

(2-2-1) Compressor

The compressor 21 is a device that sucks low-pressure refrigerant in a refrigeration cycle from the suction pipe 12a, compresses the refrigerant using a compression mechanism (not illustrated), and discharges the compressed refrigerant to the discharge pipe 12b. In this embodiment, the heat source unit 20 includes only one compressor 21. However, the number of compressors 21 is not limited to one. For example, the heat source unit 20 may include a plurality of compressors 21 connected in parallel. In a case where the heat source unit 20 is configured to compress refrigerant in a plurality of stages, the heat source unit 20 may include a plurality of compressors 21 connected in series.

The compressor 21 is not limited in type, but is, for example, a positive-displacement compressor such as a rotary or scroll positive-displacement compressor. The compression mechanism (not illustrated) of the compressor 21 is driven by a motor 21a (see Fig. 2). When the motor 21a drives the compression mechanism (not illustrated), the refrigerant is compressed by the compression mechanism. The motor 21a is a motor whose number of revolutions can be controlled by an inverter. The number of revolutions (operating frequency) of the motor 21a is controlled to control the capacity of the compressor 21. The compression mechanism of the compressor 21 may be driven by a prime mover (for example, an internal combustion engine) other than a motor.

(2-2-2) Flow Direction Switching Mechanism

The flow direction switching mechanism 22 is a mechanism that switches the flow direction of the refrigerant to change the state of the heat-source-side heat exchanger 23 between a first state in which the heat-source-side heat exchanger 23 functions as a condenser and a second state in which the heat-source-side heat exchanger 23 functions as an evaporator. When the flow direction switching mechanism 22 sets the state of the heat-source-side heat exchanger 23 to the first state, the use-side heat exchanger 52 functions as an evaporator. On the other hand, when the flow direction switching mechanism 22 sets the state of the heat-source-side heat exchanger 23 to the second state, the use-side heat exchanger 52 functions as a condenser.

In this embodiment, the flow direction switching mechanism 22 is a four-way switching valve. However, the flow direction switching mechanism 22 is not limited to a four-way switching valve. For example, the flow direction switching mechanism 22 may be configured by a combination of a plurality of electromagnetic valves and refrigerant pipes so that the direction of flow of the refrigerant described below can be realized.

During the cooling operation, during the dehumidifying operation, and during the defrosting operation, the flow direction switching mechanism 22 sets the state of the heat-source-side heat exchanger 23 to the first state. In other words, during the cooling operation, during the dehumidifying operation, and during the defrosting operation, the flow direction switching mechanism 22 causes the suction pipe 12a to communicate with the second gas refrigerant pipe 12e and causes the discharge pipe 12b to communicate with the first gas refrigerant pipe 12c (see the solid line in the flow direction switching mechanism 22 in Fig. 2). During the cooling operation, during the dehumidifying operation, and during the defrosting operation, the refrigerant discharged from the compressor 21 flows through the heat-source-side heat exchanger 23, the expansion mechanism 25, and the use-side heat exchanger 52 in the refrigerant circuit 10 in this order, and returns to the compressor 21.

During the heating operation, the flow direction switching mechanism 22 sets the state of the heat-source-side heat exchanger 23 to the second state. In other words, during the heating operation, the flow direction switching mechanism 22 causes the suction pipe 12a to communicate with the first gas refrigerant pipe 12c and causes the discharge pipe 12b to communicate with the second gas refrigerant pipe 12e (see the broken line in the flow direction switching mechanism 22 in Fig. 2). During the heating operation, the refrigerant discharged from the compressor 21 flows through the use-side heat exchanger 52, the expansion mechanism 25, and the heat-source-side heat exchanger 23 in the refrigerant circuit 10 in this order, and returns to the compressor 21.

(2-2-3) Heat-Source-Side Heat Exchanger

In the heat-source-side heat exchanger 23, heat exchange is performed between the refrigerant flowing through the inside and the air (heat-source air) in the installation location of the heat source unit 20. In a case where the heat source unit 20 is installed outdoors, in the heat-source-side heat exchanger 23, heat exchange is performed between the refrigerant flowing through the inside and the outdoor air.

The heat-source-side heat exchanger 23 is not limited in type, but is, for example, a fin-and-tube heat exchanger having a plurality of heat transfer tubes and fins (not illustrated).

An end of the heat-source-side heat exchanger 23 is connected to the liquid refrigerant pipe 12d. The other end of the heat-source-side heat exchanger 23 is connected to the first gas refrigerant pipe 12c.

The heat-source-side heat exchanger 23 functions as a condenser (radiator) during the cooling operation, during the dehumidifying operation, and during the defrosting operation, and functions as an evaporator during the heating operation.

(2-2-4) Expansion Mechanism

The expansion mechanism 25 is disposed between the heat-source-side heat exchanger 23 and the use-side heat exchanger 52 in the refrigerant circuit 10 (see Fig. 2). The expansion mechanism 25 is disposed in the liquid refrigerant pipe 12d between the heat-source-side heat exchanger 23 and the liquid-side shutoff valve 14 (see Fig. 2). In a case where the heat source unit 20 does not include the expansion mechanism 25, but the use unit 50 includes an expansion mechanism similar to the expansion mechanism 25, the expansion mechanism may be disposed in the refrigerant pipe connecting the liquid-refrigerant connection pipe 2 and the use-side heat exchanger 52 inside the use unit 50.

The expansion mechanism 25 adjusts the pressure and flow rate of the refrigerant flowing through the liquid refrigerant pipe 12d. In this embodiment, the expansion mechanism 25 is an electronic expansion valve with a variable opening degree. However, the expansion mechanism 25 is not limited to an electronic expansion valve. The expansion mechanism 25 may be a expansion valve with a temperature-sensing tube or a capillary tube.

(2-2-5) Accumulator

The accumulator 24 has a gas-liquid separation function for separating the refrigerant flowing therein into gas refrigerant and liquid refrigerant. Further, the accumulator 24 is a container having a function of storing surplus refrigerant generated in accordance with a change in the operation load of the use unit 50 or the like. The accumulator 24 is disposed in the suction pipe 12a (see Fig. 2). The refrigerant flowing into the accumulator 24 is separated into gas refrigerant and liquid refrigerant, and the gas refrigerant, which is collected in the upper space, flows out to the compressor 21.

(2-2-6) Liquid-Side Shutoff Valve and Gas-Side Shutoff Valve

The liquid-side shutoff valve 14 is a valve disposed in the connection portion between the liquid refrigerant pipe 12d and the liquid-refrigerant connection pipe 2. The gas-side shutoff valve 16 is a valve disposed in the connection portion between the second gas refrigerant pipe 12e and the gas-refrigerant connection pipe 4. The liquid-side shutoff valve 14 and the gas-side shutoff valve 16 are, for example, manually operated valves.

(2-2-7) Heat-Source-Side Fan

The heat-source-side fan 28 is a fan for sucking the heat-source air outside the heat source unit 20 into a casing (not illustrated) of the heat source unit 20, supplying the heat-source air to the heat-source-side heat exchanger 23, and discharging the air heat-exchanged with the refrigerant in the heat-source-side heat exchanger 23 to the outside of the casing of the heat source unit 20.

The heat-source-side fan 28 is, for example, a propeller fan. However, the fan type of the heat-source-side fan 28 is not limited to the propeller fan and is selected as appropriate.

The heat-source-side fan 28 is driven by the fan motor 28a (see Fig. 2). The heat-source-side fan 28 is a variable-air-volume fan driven by the fan motor 28a whose number of revolutions can be changed.

(2-2-8) Sensors

The heat source unit 20 is provided with various sensors. For example, the heat source unit 20 includes the following temperature sensors and pressure sensors. The types of the temperature sensors and the pressure sensors are selected as appropriate.

The sensors included in the heat source unit 20 include a discharge pressure sensor 30, a suction pressure sensor 31, a suction temperature sensor 32, a discharge temperature sensor 33, a heat-exchange temperature sensor 34, a liquid-side temperature sensor 35, and a heat-source air temperature sensor 36 (see Fig. 2). The heat source unit 20 may include only some of the sensors 30 to 36 described above. The heat source unit 20 may include a sensor other than the sensors 30 to 36 described above.

The discharge pressure sensor 30 is disposed in the discharge pipe 12b (see Fig. 2). The discharge pressure sensor 30 is a sensor that measures a discharge pressure Pd.

The suction pressure sensor 31 is disposed in the suction pipe 12a (see Fig. 2). The suction pressure sensor 31 is a sensor that measures a suction pressure Ps.

The suction temperature sensor 32 is disposed in the suction pipe 12a (see Fig. 2). The suction temperature sensor 32 is a sensor that measures a suction temperature Ts.

The discharge temperature sensor 33 is disposed in the discharge pipe 12b (see Fig. 2). The discharge temperature sensor 33 is a sensor that measures a discharge temperature Td.

The heat-exchange temperature sensor 34 is disposed in the heat-source-side heat exchanger 23 (see Fig. 2). The heat-exchange temperature sensor 34 measures the temperature of the refrigerant flowing through the heat-source-side heat exchanger 23. The heat-exchange temperature sensor 34 measures the refrigerant temperature corresponding to a condensation temperature Tc during the cooling operation, and measures the refrigerant temperature corresponding to an evaporation temperature Te during the heating operation.

The liquid-side temperature sensor 35 is disposed in the liquid refrigerant pipe 12d (on the liquid side of the heat-source-side heat exchanger 23) and measures the temperature Tb of the refrigerant flowing through the liquid refrigerant pipe 12d. When the state of the heat-source-side heat exchanger 23 is switched to the first state, the temperature Tb of the refrigerant measured by the liquid-side temperature sensor 35 is subtracted from the condensation temperature Tc measured by the heat-exchange temperature sensor 34 to calculate the degree of subcooling SCr of the refrigeration cycle.

The heat-source air temperature sensor 36 measures the temperature of the heat-source air.

(2-2-9) Heat-Source-Side Control Unit

The heat-source-side controller 62 controls the operation of the components constituting the heat source unit 20.

The heat-source-side controller 62 includes a microcomputer disposed to control the heat source unit 20, a memory storing a control program implementable by the microcomputer, and so on. The configuration of the heat-source-side controller 62 described here is merely an example, and the functions of the heat-source-side controller 62 described below may be implemented by software, hardware, or a combination of software and hardware.

The heat-source-side controller 62 is electrically connected to the compressor 21, the flow direction switching mechanism 22, the expansion mechanism 25, the heat-source-side fan 28, the discharge pressure sensor 30, the suction pressure sensor 31, the suction temperature sensor 32, the discharge temperature sensor 33, the heat-exchange temperature sensor 34, the liquid-side temperature sensor 35, and the heat-source air temperature sensor 36 so as to be capable of exchanging control signals or information (see Fig. 2).

The heat-source-side controller 62 is connected to the use-side controller 64 of the use unit 50 via the transmission line 66 in such a manner that control signals and the like can be exchanged. The heat-source-side controller 62 and the use-side controller 64 cooperate with each other to function as the controller 60A that controls the overall operation of the first air conditioning apparatus 100A. The controller 60A will be described below.

(2-3) Refrigerant Connection Pipes

The first air conditioning apparatus 100A includes refrigerant connection pipes, namely, the liquid-refrigerant connection pipe 2 and the gas-refrigerant connection pipe 4. The liquid-refrigerant connection pipe 2 and the gas-refrigerant connection pipe 4 are pipes constructed at an installation site of the first air conditioning apparatus 100A at the time of installation of the first air conditioning apparatus 100A. Pipes having various lengths and diameters are used for the liquid-refrigerant connection pipe 2 and the gas-refrigerant connection pipe 4 in accordance with installation conditions such as the installation location and a combination of the heat source unit 20 and the use unit 50.

The use-side refrigerant circuit 10a of the use unit 50 and the heat-source-side refrigerant circuit 10b of the heat source unit 20 are connected by the liquid-refrigerant connection pipe 2 and the gas-refrigerant connection pipe 4 to form the refrigerant circuit 10 of the first air conditioning apparatus 100A.

(2-4) Controller

The controller 60A is configured by communicably connecting the heat-source-side controller 62 of the heat source unit 20 and the use-side controller 64 of the use unit 50 via the transmission line 66. The controller 60A controls the overall operation of the first air conditioning apparatus 100A by the microcomputer of the heat-source-side controller 62 or the use-side controller 64 executing the program stored in the memory.

In this embodiment, the heat-source-side controller 62 and the use-side controller 64 constitute the controller 60A. However, the configuration of the controller 60A is not limited to this form.

For example, the first air conditioning apparatus 100A may include, in addition to the heat-source-side controller 62 and the use-side controller 64 or instead of the heat-source-side controller 62 and the use-side controller 64, a control device that implements some or all of the functions of the controller 60A described below. This control device may be a device dedicated to control of the first air conditioning apparatus 100A, or may be a device that controls a plurality of air conditioning apparatuses including the first air conditioning apparatus 100A. The control device may be a server installed in a location different from the location in which the air conditioning system 100 is installed.

As illustrated in Fig. 2, the controller 60A is electrically connected to various devices of the heat source unit 20 and the use unit 50, including the compressor 21, the flow direction switching mechanism 22, the expansion mechanism 25, the heat-source-side fan 28, and the use-side fan 53. As illustrated in Fig. 2, the controller 60A is further electrically connected to the various sensors 30 to 36 disposed in the heat source unit 20 and the various sensors 54 to 57 disposed in the use unit 50.

The controller 60A controls the operation and stop of the first air conditioning apparatus 100A and the operation of the various devices 21, 22, 25, 28, and 53 and the like of the first air conditioning apparatus 100A in accordance with measurement signals of the various sensors 30 to 36 and 54 to 57, commands received by the use-side controller 64 from the remote controller (not illustrated), and the like. Further, the controller 60A controls the operation and stop of the first air conditioning apparatus 100A and the operation of the various devices 21, 22, 25, 28, and 53 and the like of the first air conditioning apparatus 100A in accordance with instructions from the apparatus evaluation system 200. The control of the operation of the first air conditioning apparatus 100A during the cooling operation, during the heating operation, and during the defrosting operation will be described below. The control of the operation of the first air conditioning apparatus 100A by the controller 60A in accordance with an instruction from the apparatus evaluation system 200 will be described below together with the description of the apparatus evaluation system 200.

(2-5) Operation of First Air Conditioning Apparatus

The control of the operation of the first air conditioning apparatus 100A during the cooling operation, during the heating operation, and during the defrosting operation will be described. The dehumidifying operation is different from the cooling operation in that the main purpose of the dehumidifying operation is to dehumidify the space S and the control target is the humidity of the space S. However, the operation of the first air conditioning apparatus 100A during the dehumidifying operation is similar to the operation of the first air conditioning apparatus 100A during the cooling operation, and the description of the dehumidifying operation will thus be omitted.

(2-5-1) Operation during Cooling Operation

When an instruction is given to the first air conditioning apparatus 100A to execute the cooling operation, the controller 60A sets the operating mode of the first air conditioning apparatus 100A to the cooling operating mode. The controller 60A controls the flow direction switching mechanism 22 to achieve the state indicated by the solid line in Fig. 2 so that the state of the heat-source-side heat exchanger 23 becomes the first state in which the heat-source-side heat exchanger 23 functions as a condenser, and operates the compressor 21, the heat-source-side fan 28, and the use-side fan 53.

During the cooling operation, for example, the controller 60A controls the devices of the first air conditioning apparatus 100A in the following manner. The control of the operation of the first air conditioning apparatus 100A during the cooling operation described here is an example, and the control method for the first air conditioning apparatus 100A by the controller 60A during the cooling operation is not limited. For example, the controller 60A may control the operation of various devices on the basis of parameters other than those described here.

The controller 60A controls the number of revolutions of the fan motor 28a, which drives the heat-source-side fan 28, and the number of revolutions of the fan motor 53a, which drives the use-side fan 53, to predetermined numbers of revolutions. For example, the controller 60A controls the number of revolutions of the fan motor 28a to the maximum number of revolutions. The controller 60A controls the number of revolutions of the fan motor 53a as appropriate in accordance with instructions for the air volume and the like, which are input to the remote controller.

The controller 60A adjusts the opening degree of the electronic expansion valve, which is an example of the expansion mechanism 25, so that the degree of subcooling SCr of the refrigerant at the liquid-side outlet of the heat-source-side heat exchanger 23 becomes a predetermined target degree of subcooling SCrs. The degree of subcooling SCr of the refrigerant at the liquid-side outlet of the heat-source-side heat exchanger 23 is calculated by, for example, subtracting the measurement value (the temperature Tb) of the liquid-side temperature sensor 35 from the condensation temperature Tc measured by the heat-exchange temperature sensor 34. The degree of subcooling SCr may be calculated based on the measurement value of any other sensor.

The controller 60A controls the operating capacity of the compressor 21 so that the evaporation temperature Te corresponding to the measurement value (the suction pressure Ps) of the suction pressure sensor 31 becomes close to a target evaporation temperature Tes determined by the temperature difference between the space temperature Tr measured by the space temperature sensor 56 and the set temperature Trs. The operating capacity of the compressor 21 is controlled by controlling the number of revolutions of the motor 21a.

When the operation of the devices of the first air conditioning apparatus 100A is controlled in the manner described above during the cooling operation, the refrigerant flows through the refrigerant circuit 10 as follows.

When the compressor 21 is activated, the low-pressure gas refrigerant in the refrigeration cycle is sucked into the compressor 21 and compressed by the compressor 21 into high-pressure gas refrigerant in the refrigeration cycle. The high-pressure gas refrigerant is delivered to the heat-source-side heat exchanger 23 through the flow direction switching mechanism 22, exchanges heat with the heat-source air supplied by the heat-source-side fan 28, and condenses into high-pressure liquid refrigerant. The high-pressure liquid refrigerant flows through the liquid refrigerant pipe 12d. The high-pressure liquid refrigerant is decompressed to near the suction pressure of the compressor 21 and becomes refrigerant in a gas-liquid two-phase state in the expansion mechanism 25 and is then delivered to the use unit 50. In the use-side heat exchanger 52, the refrigerant in the gas-liquid two-phase state delivered to the use unit 50 exchanges heat with the air in the space S, which is supplied to the use-side heat exchanger 52 by the use-side fan 53, and evaporates into low-pressure gas refrigerant. The low-pressure gas refrigerant is delivered to the heat source unit 20 through the gas-refrigerant connection pipe 4 and flows into the accumulator 24 through the flow direction switching mechanism 22. The low-pressure gas refrigerant flowing into the accumulator 24 is sucked into the compressor 21 again. On the other hand, the temperature of the air supplied to the use-side heat exchanger 52 is decreased by heat exchange with the refrigerant flowing through the use-side heat exchanger 52, and the air cooled by the use-side heat exchanger 52 is blown out into the space S.

(2-5-2) Operation during Heating Operation

When an instruction is given to the first air conditioning apparatus 100A to execute the heating operation, the controller 60A sets the operating mode of the first air conditioning apparatus 100A to the heating operating mode. The controller 60A controls the flow direction switching mechanism 22 to achieve the state indicated by the broken line in Fig. 2 so that the state of the heat-source-side heat exchanger 23 becomes the second state in which the heat-source-side heat exchanger 23 functions as an evaporator, and operates the compressor 21, the heat-source-side fan 28, and the use-side fan 53.

During the heating operation, for example, the controller 60A controls the devices of the first air conditioning apparatus 100A in the following manner. The control of the operation of the first air conditioning apparatus 100A during the heating operation described here is an example, and the control method for the first air conditioning apparatus 100A by the controller 60A during the heating operation is not limited. For example, the controller 60A may control the operation of various devices on the basis of parameters other than those described here.

The controller 60A controls the number of revolutions of the fan motor 28a, which drives the heat-source-side fan 28, and the number of revolutions of the fan motor 53a, which drives the use-side fan 53, to predetermined numbers of revolutions. For example, the controller 60A controls the number of revolutions of the fan motor 28a to the maximum number of revolutions. The controller 60A controls the number of revolutions of the fan motor 53a as appropriate in accordance with instructions for the air volume and the like, which are input to the remote controller.

The controller 60A adjusts the opening degree of the electronic expansion valve, which is an example of the expansion mechanism 25, so that the degree of subcooling SCr of the refrigerant at the liquid-side outlet of the use-side heat exchanger 52 becomes a predetermined target degree of subcooling SCrs. The degree of subcooling SCr of the refrigerant at the liquid-side outlet of the use-side heat exchanger 52 is calculated by, for example, subtracting the measurement value of the liquid-side temperature sensor 54 from the condensation temperature Tc converted from the measurement value (the discharge pressure Pd) of the discharge pressure sensor 30.

The controller 60A controls the operating capacity of the compressor 21 so that the condensation temperature Tc corresponding to the measurement value (the discharge pressure Pd) of the discharge pressure sensor 30 becomes close to a target condensation temperature Tcs determined by the temperature difference between the space temperature Tr measured by the space temperature sensor 56 and the set temperature Trs. The operating capacity of the compressor 21 is controlled by controlling the number of revolutions of the motor 21a.

When the operation of the devices of the first air conditioning apparatus 100A is controlled in the manner described above during the heating operation, the refrigerant flows through the refrigerant circuit 10 as follows.

When the compressor 21 is activated, the low-pressure gas refrigerant in the refrigeration cycle is sucked into the compressor 21 and compressed by the compressor 21 into high-pressure gas refrigerant in the refrigeration cycle. The high-pressure gas refrigerant is delivered to the use-side heat exchanger 52 through the flow direction switching mechanism 22, exchanges heat with the air in the space S, which is supplied by the use-side fan 53, and condenses into high-pressure liquid refrigerant. The temperature of the air supplied to the use-side heat exchanger 52 is increased by heat exchange with the refrigerant flowing through the use-side heat exchanger 52, and the air heated by the use-side heat exchanger 52 is blown out into the space S. The high-pressure liquid refrigerant flowing out of the use-side heat exchanger 52 is delivered to the heat source unit 20 through the liquid-refrigerant connection pipe 2 and flows into the liquid refrigerant pipe 12d. The refrigerant flowing through the liquid refrigerant pipe 12d is decompressed to near the suction pressure of the compressor 21 when passing through the expansion mechanism 25, and becomes refrigerant in a gas-liquid two-phase state. The gas-liquid two-phase state flows into the heat-source-side heat exchanger 23. The low-pressure refrigerant in the gas-liquid two-phase state flowing into the heat-source-side heat exchanger 23 exchanges heat with the heat-source air supplied by the heat-source-side fan 28, and evaporates into low-pressure gas refrigerant. The low-pressure gas refrigerant then flows into the accumulator 24 through the flow direction switching mechanism 22. The low-pressure gas refrigerant flowing into the accumulator 24 is sucked into the compressor 21 again.

(2-5-3) Operation during Defrosting Operation

When the operating mode of the first air conditioning apparatus 100A is the heating operating mode, the controller 60A controls the flow direction switching mechanism 22 to temporarily set the state of the heat-source-side heat exchanger 23 to the first state to perform the defrosting operation. The defrosting operation is an operation for melting and removing frost adhering to the heat-source-side heat exchanger 23.

During the heating operation, when it is determined that a predetermined defrosting start condition is satisfied, the controller 60A controls the flow direction switching mechanism 22 to switch the state of the heat-source-side heat exchanger 23 from the second state in which the heat-source-side heat exchanger 23 functions as an evaporator to the first state in which the heat-source-side heat exchanger 23 functions as a condenser.

The defrosting start condition is a condition in which it is preferable to perform defrosting of the heat-source-side heat exchanger 23 when the condition is satisfied. For example, when the temperature of the refrigerant measured by the heat-exchange temperature sensor 34 becomes less than or equal to a predetermined temperature, the controller 60A determines that the defrosting start condition is satisfied. The predetermined temperature used as a threshold value for determining whether the defrosting start condition is satisfied is, for example, -5°C. The controller 60A may determine that the defrosting start condition is satisfied when the duration of the heating operation exceeds a predetermined time.

During the defrosting operation, the first air conditioning apparatus 100A operates in the following way, for example. The operation of the first air conditioning apparatus 100A during the defrosting operation described here is an example, and the operation of the first air conditioning apparatus 100A during the defrosting operation is not limited.

The controller 60A temporarily stops the compressor 21 or reduces the number of revolutions of the compressor 21 before the defrosting operation is started. Thereafter, the controller 60A switches the flow direction switching mechanism 22 from the state during the heating operation to a state similar to that during the cooling operation at a predetermined timing, and operates the compressor 21 at a predetermined number of revolutions (starts the defrosting operation). The controller 60A controls the number of revolutions of the compressor 21 to be relatively high to melt frost adhering to the heat-source-side heat exchanger 23. The controller 60A controls the heat-source-side fan 28 to have a predetermined air volume smaller than the maximum air volume. The controller 60A stops the use-side fan 53. The controller 60A adjusts the electronic expansion valve as an example of the expansion mechanism 25 to be substantially fully opened immediately after the defrosting operation is started, and then appropriately adjusts the opening degree of the electronic expansion valve.

When the controller 60A determines that a defrosting end condition is satisfied during the defrosting operation, the controller 60A terminates the defrosting operation and returns to the heating operation. For example, when the refrigerant temperature measured by the heat-exchange temperature sensor 34 becomes higher than or equal to a predetermined end determination temperature and this state continues for a predetermined time or longer, the controller 60A determines that the defrosting end condition is satisfied.

The defrosting end condition is not limited to the condition described above. For example, the controller 60A may determine that the defrosting end condition is satisfied immediately when the refrigerant temperature measured by the heat-exchange temperature sensor 34 becomes higher than or equal to the predetermined end determination temperature.

(3) Apparatus Evaluation System

Next, the apparatus evaluation system 200 that evaluates the first air conditioning apparatus 100A and the second air conditioning apparatus 100B will be described with reference to Fig. 3.

The apparatus evaluation system 200 mainly includes the evaluation apparatus 210. In this embodiment, the evaluation apparatus 210 is a computer. The evaluation apparatus 210 may be constituted by a single computer or constituted by a plurality of computers communicably connected to each other. The configuration of the evaluation apparatus 210 described here is merely an example, and the functions of the evaluation apparatus 210 described below may be implemented by software, hardware, or a combination of software and hardware.

The evaluation apparatus 210 is an independent apparatus separate from the first air conditioning apparatus 100A and the second air conditioning apparatus 100B and arranged at a site where the air conditioning system 100 is installed. However, the evaluation apparatus 210 is not limited to this and may be mounted in the first air conditioning apparatus 100A and/or the second air conditioning apparatus 100B.

The evaluation apparatus 210 may be installed in a location other than the site where the air conditioning system 100 is installed, and may be communicably connected to the first air conditioning apparatus 100A and the second air conditioning apparatus 100B.

The evaluation apparatus 210 may not be an apparatus that only evaluates the air conditioning apparatuses (the first air conditioning apparatus 100A and the second air conditioning apparatus 100B) installed in the space S. The evaluation apparatus 210 may also evaluate an air conditioning apparatus that performs air conditioning of a space other than the space S in the building in which the first air conditioning apparatus 100A and the second air conditioning apparatus 100B are installed, or an air conditioning apparatus installed in a location different from the location where the air conditioning system 100 is installed.

The evaluation apparatus 210 is communicably connected to the controller 60A of the first air conditioning apparatus 100A and the controller 60B of the second air conditioning apparatus 100B. The evaluation apparatus 210 and the control units 60A and 60B may be communicably connected via a physical communication line, or may be communicably connected wirelessly.

The evaluation apparatus 210 is capable of transmitting to the controller 60A a signal for instructing the operation of the first air conditioning apparatus 100A. In other words, the evaluation apparatus 210 is capable of controlling the operation of the first air conditioning apparatus 100A. Further, the evaluation apparatus 210 is capable of transmitting to the controller 60B a signal for instructing the operation of the second air conditioning apparatus 100B. In other words, the evaluation apparatus 210 is capable of controlling the operation of the second air conditioning apparatus 100B. Further, the evaluation apparatus 210 is capable of receiving from the controller 60A information on the operating state of the first air conditioning apparatus 100A, and measurement data of the various sensors included in the first air conditioning apparatus 100A. The evaluation apparatus 210 is further capable of receiving from the controller 60B information on the operating state of the second air conditioning apparatus 100B, and measurement data included in the various sensors included in the second air conditioning apparatus 100B.

The evaluation apparatus 210 mainly functions as an evaluation unit 212 and an air conditioning control unit 214 by a CPU of the computer executing the program stored in the memory (see Fig. 3).

(3-1) Evaluation Unit

The evaluation unit 212 is an example of a first evaluation unit. The evaluation unit 212 evaluates the first air conditioning apparatus 100A based on a predetermined first evaluation index obtained in a first evaluation operation in which the first air conditioning apparatus 100A is operated in a predetermined operating state. More specifically, the evaluation unit 212 performs a first evaluation process and a second evaluation process as evaluation processes of the first air conditioning apparatus 100A. In the first evaluation process, the evaluation unit 212 evaluates the first air conditioning apparatus 100A based on the first evaluation index obtained in a first operation performed as the first evaluation operation at the time of installation of the first air conditioning apparatus 100A. In the second evaluation process, the evaluation unit 212 evaluates the first air conditioning apparatus 100A based on the first evaluation index obtained in a second operation performed as the first evaluation operation after the lapse of a predetermined period from the first evaluation process. The first evaluation operation and the first evaluation index will be described later.

The first evaluation process is performed at the time of a trial operation of the first air conditioning apparatus 100A or the like after the heat source unit 20 and the use unit 50 of the first air conditioning apparatus 100A are installed and the heat source unit 20 and the use unit 50 are connected by the liquid-refrigerant connection pipe 2 and the gas-refrigerant connection pipe 4.

The second evaluation process is repeatedly performed, for example, when a first period has elapsed since the first evaluation process and when the first period has elapsed since the second evaluation process was performed previously. Specifically, the second evaluation process is repeatedly performed, for example, when one year has elapsed since the first evaluation process was performed and, after that, each time one year elapses. However, the second evaluation process may not be performed periodically. For example, the second evaluation process may be performed at any timing in response to a request from an input unit (not illustrated).

The evaluation unit 212 is an example of a second evaluation unit. The evaluation unit 212 evaluates the second air conditioning apparatus 100B based on a predetermined second evaluation index obtained in a second evaluation operation in which the second air conditioning apparatus 100B is operated in a predetermined operating state. More specifically, the evaluation unit 212 performs a third evaluation process and a fourth evaluation process as evaluation processes of the second air conditioning apparatus 100B. In the third evaluation process, the evaluation unit 212 evaluates the second air conditioning apparatus 100B based on the second evaluation index obtained in a third operation performed as the second evaluation operation at the time of installation of the second air conditioning apparatus 100B. In the fourth evaluation process, the evaluation unit 212 evaluates the second air conditioning apparatus 100B based on the second evaluation index obtained in a fourth operation performed as the second evaluation operation after the lapse of a predetermined period from the third evaluation process.

The third evaluation process is performed at the time of a trial operation of the second air conditioning apparatus 100B or the like after the heat source unit 20 and the use unit 50 of the second air conditioning apparatus 100B are installed and the heat source unit 20 and the use unit 50 are connected by the liquid-refrigerant connection pipe 2 and the gas-refrigerant connection pipe 4.

The fourth evaluation process is repeatedly performed, for example, when a second period has elapsed since the third evaluation process and when the second period has elapsed since the fourth evaluation process was performed previously. Specifically, the fourth evaluation process is repeatedly performed, for example, when one year has elapsed since the third evaluation process was performed and, after that, each time one year elapses. The interval (second period) over which the fourth evaluation process is executed may not be the same as the interval (first period) over which the second evaluation process is executed. The fourth evaluation process may not be performed periodically. For example, the fourth evaluation process may be performed at any timing in response to a request from the input unit (not illustrated).

(3-2) Air Conditioning Control Unit

The air conditioning control unit 214 is an example of a second air conditioning control unit that controls the first air conditioning apparatus 100A. The air conditioning control unit 214 transmits to the controller 60A of the first air conditioning apparatus 100A a signal for instructing the operation of the first air conditioning apparatus 100A to control the operation of the first air conditioning apparatus 100A.

The air conditioning control unit 214 is an example of a first air conditioning control unit that controls the second air conditioning apparatus 100B. The air conditioning control unit 214 transmits to the controller 60B of the second air conditioning apparatus 100B a signal for instructing the operation of the second air conditioning apparatus 100B to control the operation of the second air conditioning apparatus 100B.

The air conditioning control unit 214 controls the first air conditioning apparatus 100A to cause the first air conditioning apparatus 100A to perform the first operation or the second operation as the first evaluation operation.

Further, the air conditioning control unit 214 operates the second air conditioning apparatus 100B before at least one of the first operation and the second operation is performed in the first air conditioning apparatus 100A and/or while at least one of the first operation and the second operation is being performed in the first air conditioning apparatus 100A.

In other words, the air conditioning control unit 214 operates the second air conditioning apparatus 100B at least at one timing among the following four timings:

1) before the first operation is performed in the first air conditioning apparatus 100A;
2) before the second operation is performed in the first air conditioning apparatus 100A;
3) while the first operation is being performed in the first air conditioning apparatus 100A; and
4) while the second operation is being performed in the first air conditioning apparatus 100A.

Preferably, the air conditioning control unit 214 operates the second air conditioning apparatus 100B before at least one of the first operation and the second operation is performed in the first air conditioning apparatus 100A and/or while at least one of the first operation and the second operation is being performed in the first air conditioning apparatus 100A to bring the temperature of the space S close to a target temperature A. The air conditioning control unit 214 may operate the second air conditioning apparatus 100B before at least one of the first operation and the second operation is performed in the first air conditioning apparatus 100A and/or while at least one of the first operation and the second operation is being performed in the first air conditioning apparatus 100A to bring the humidity of the space S close to a target humidity B instead of the adjustment of the temperature of the space S or in addition to the adjustment of the temperature of the space S.

The air conditioning control unit 214 controls the second air conditioning apparatus 100B to cause the second air conditioning apparatus 100B to perform the third operation or the fourth operation as the second evaluation operation.

Further, the air conditioning control unit 214 operates the first air conditioning apparatus 100A before at least one of the third operation and the fourth operation described above is performed in the second air conditioning apparatus 100B and/or while at least one of the third operation and the fourth operation is being performed in the second air conditioning apparatus 100B.

In other words, the air conditioning control unit 214 operates the first air conditioning apparatus 100A at least at one timing among the following four timings:

1) before the third operation is performed in the second air conditioning apparatus 100B;
2) before the fourth operation is performed in the second air conditioning apparatus 100B;
3) while the third operation is being performed in the second air conditioning apparatus 100B; and
4) while the fourth operation is being performed in the second air conditioning apparatus 100B.

Preferably, the air conditioning control unit 214 operates the first air conditioning apparatus 100A before at least one of the third operation and the fourth operation is performed in the second air conditioning apparatus 100B and/or while at least one of the third operation and the fourth operation is being performed in the second air conditioning apparatus 100B to bring the temperature of the space S close to the target temperature A. The air conditioning control unit 214 may operate the first air conditioning apparatus 100A before at least one of the third operation and the fourth operation is performed in the second air conditioning apparatus 100B and/or while at least one of the third operation and the fourth operation is being performed in the second air conditioning apparatus 100B to bring the humidity of the space S close to the target humidity B instead of the adjustment of the temperature of the space S or in addition to the adjustment of the temperature of the space S.

The control of the first air conditioning apparatus 100A and the second air conditioning apparatus 100B by the air conditioning control unit 214 will further be described below together with the description of the evaluation of the first air conditioning apparatus 100A and the second air conditioning apparatus 100B by the evaluation unit 212.

(4) Evaluation of Air Conditioning Apparatus

The evaluation of the air conditioning apparatuses 100A and 100B by the apparatus evaluation system 200 will be described by taking as an example the evaluation of the first air conditioning apparatus 100A by the apparatus evaluation system 200. As a premise, it is assumed that, during the evaluation of the first air conditioning apparatus 100A, the second air conditioning apparatus 100B has been installed in the installation location in such a manner as to be able to air condition the space S. The evaluation of the second air conditioning apparatus 100B by the apparatus evaluation system 200 is similar to the evaluation of the first air conditioning apparatus 100A by the apparatus evaluation system 200, and the description thereof will thus be omitted here to avoid redundant description.

The evaluation of the first air conditioning apparatus 100A by the apparatus evaluation system 200 includes, as described above, at least one of the evaluation of the amount of refrigerant of the first air conditioning apparatus 100A, the evaluation of the performance of the first air conditioning apparatus 100A, and the evaluation of the failure of the first air conditioning apparatus 100A.

(4-1) Flow of Evaluation of First Air Conditioning Apparatus by Apparatus Evaluation System

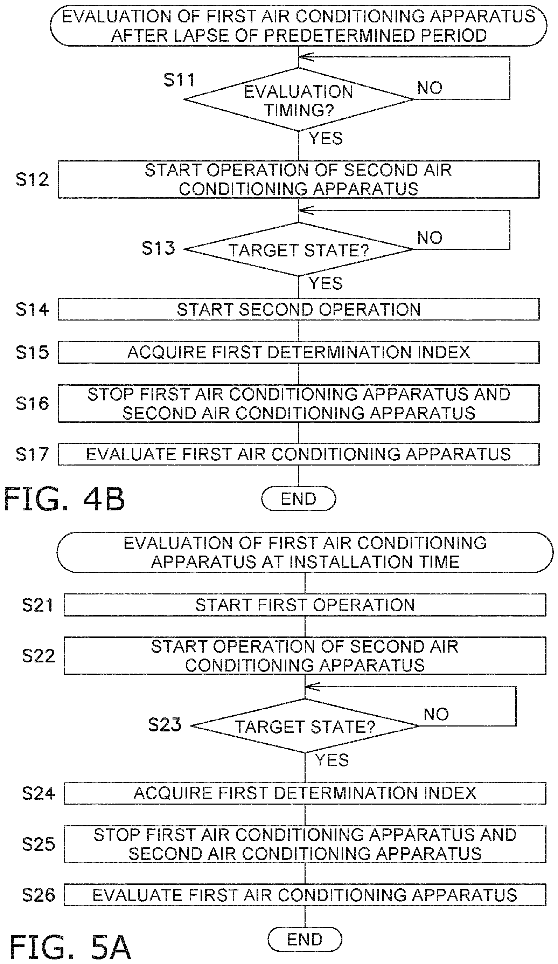

First, the flow of the evaluation of the first air conditioning apparatus 100A by the apparatus evaluation system 200 will be described with reference to flowcharts in Fig. 4A and Fig. 4B. Here, the basic flow of the evaluation of the first air conditioning apparatus 100A will be described without limiting the content of the evaluation performed by the apparatus evaluation system 200. A specific example of the evaluation of the first air conditioning apparatus 100A will be described separately.

In the following description, it is assumed that the first air conditioning apparatus 100A is evaluated for the same content of evaluation at the time of installation of the first air conditioning apparatus 100A and after the lapse of a predetermined period from the first evaluation process.

<At the Time of Installation of First Air Conditioning Apparatus>

The apparatus evaluation system 200 evaluates the first air conditioning apparatus 100A at the time of installation of the first air conditioning apparatus 100A. This evaluation is referred to as first evaluation. For example, the apparatus evaluation system 200 performs the first evaluation when the installation worker of the first air conditioning apparatus 100A gives an instruction to the input unit (not illustrated) of the evaluation apparatus 210 to perform the evaluation of the first air conditioning apparatus 100A. However, the first evaluation may not be performed in response to an instruction from the installation worker of the first air conditioning apparatus 100A as a trigger. For example, the apparatus evaluation system 200 may regard the time when the apparatus evaluation system 200 is communicably connected to the first air conditioning apparatus 100A for the first time as the time of installation of the first air conditioning apparatus 100A, and perform the first evaluation at this time.

When the apparatus evaluation system 200 performs the first evaluation, the air conditioning control unit 214 of the evaluation apparatus 210 preferably operates the second air conditioning apparatus 100B before the first air conditioning apparatus 100A performs the first operation as the first evaluation operation (see step S 1 in Fig. 4A). Specifically, the air conditioning control unit 214 operates the second air conditioning apparatus 100B so that the temperature of the space S becomes the predetermined target temperature A suitable for the evaluation of the first air conditioning apparatus 100A. The air conditioning control unit 214 may operate the second air conditioning apparatus 100B to, instead of or in addition to adjusting the temperature of the space S to the target temperature A, adjust the humidity of the space S to the target humidity B suitable for the evaluation of the first air conditioning apparatus 100A.

When the second air conditioning apparatus 100B is operated in step S 1, the evaluation apparatus 210 determines whether the environment of the space S is in a target state (step S2). In a case where the second air conditioning apparatus 100B is operated in order to adjust the temperature of the space S, the recitation that "the environment of the space S is in the target state" means that the temperature of the space S becomes the target temperature A or a temperature close to the target temperature A. In a case where the second air conditioning apparatus 100B is operated in order to adjust the humidity of the space S, the recitation that "the environment of the space S is in the target state" means that, for example, the humidity of the space S becomes the target humidity B or a humidity lower than the target humidity B.

If the environment of the space S is in the target state (Yes in step S2 in Fig. 4A), the apparatus evaluation system 200 starts the first operation of the first air conditioning apparatus 100A as the first evaluation operation. Specifically, the air conditioning control unit 214 of the evaluation apparatus 210 operates the first air conditioning apparatus 100A so that the first air conditioning apparatus 100A enters a predetermined operating state (see step S3 in Fig. 4A). In the flowchart in Fig. 4A, the air conditioning control unit 214 continues operating the second air conditioning apparatus 100B so that the environment of the space S is in the target state described above even after the first air conditioning apparatus 100A has started the first operation.

The evaluation apparatus 210 of the apparatus evaluation system 200 acquires a first determination index used for the evaluation of the first air conditioning apparatus 100A after the first air conditioning apparatus 100A has entered the predetermined operating state.

The first determination index is, for example, one or a plurality of measurement values of the various sensors 30 to 36 and 54 to 57 transmitted from the controller 60A of the first air conditioning apparatus 100A to the evaluation apparatus 210. For example, the first determination index may be a value calculated by the evaluation apparatus 210 on the basis of the measurement values of the various sensors 30 to 36 and 54 to 57 transmitted from the first air conditioning apparatus 100A. Alternatively, the first determination index may be a value that is calculated by the controller 60A of the first air conditioning apparatus 100A on the basis of the measurement values of the various sensors 30 to 36 and 54 to 57 of the first air conditioning apparatus 100A and that is transmitted to the evaluation apparatus 210. Alternatively, the first determination index may be a current value or the like of the compressor 21 of the first air conditioning apparatus 100A, which is measured by an ammeter (not illustrated) attached to the first air conditioning apparatus 100A and transmitted to the evaluation apparatus 210.

The apparatus evaluation system 200 does not need to acquire the measurement values or the like of various sensors as the first determination index for the first time after the operating state of the first air conditioning apparatus 100A has become a predetermined state. For example, the evaluation apparatus 210 of the apparatus evaluation system 200 may successively acquire the measurement values or the like of various sensors from the time point when the operation of the first air conditioning apparatus 100A is started. Then, the evaluation apparatus 210 may determine, based on the measurement values of various sensors, whether the operating state of the first air conditioning apparatus 100A has become the predetermined state, and use, as the first determination index, the measurement values or the like of various sensors obtained after it is determined that the operating state of the first air conditioning apparatus 100A has become the predetermined state. In another embodiment, the evaluation apparatus 210 may use, as the first determination index, the measurement values or the like of various sensors obtained after a signal indicating that the operating state of the first air conditioning apparatus 100A has become the predetermined state is transmitted from the first air conditioning apparatus 100A.

When the apparatus evaluation system 200 acquires the first determination index, the air conditioning control unit 214 of the evaluation apparatus 210 stops the first air conditioning apparatus 100A and the second air conditioning apparatus 100B (step S5 in Fig. 4A).

In this embodiment, the air conditioning control unit 214 stops the second air conditioning apparatus 100B in step S5. However, the timing of stopping the second air conditioning apparatus 100B is not limited to this timing. For example, the air conditioning control unit 214 may stop the second air conditioning apparatus 100B at the time point when the environment of the space S achieves the target state (before the first operation of the first air conditioning apparatus 100A is started after Yes is determined in step S2).

Since it is assumed that it is not necessary to operate the first air conditioning apparatus 100A or the second air conditioning apparatus 100B, in step S5, the air conditioning control unit 214 stops the first air conditioning apparatus 100A and the second air conditioning apparatus 100B. However, in a case where it is necessary to operate the first air conditioning apparatus 100A and/or the second air conditioning apparatus 100B, the air conditioning control unit 214 may not stop the first air conditioning apparatus 100A and/or the second air conditioning apparatus 100B in step S5.

Then, in step S6, the evaluation unit 212 evaluates the first air conditioning apparatus 100A based on the first evaluation index obtained in step S4 (first evaluation process).

<At the Time of Evaluation of First Air Conditioning Apparatus after First Evaluation Process>

The apparatus evaluation system 200 evaluates the first air conditioning apparatus 100A after the lapse of a predetermined period from the first evaluation process. This evaluation is referred to as second evaluation. The evaluation of the first air conditioning apparatus 100A further performed after the second evaluation, which is performed after the first evaluation process, is also referred to herein as second evaluation.

In this embodiment, the evaluation apparatus 210 of the apparatus evaluation system 200 determines whether the timing of executing the second evaluation is reached (step S11 in Fig. 4B). When the timing of executing the second evaluation is reached, the evaluation apparatus 210 executes the second evaluation.

For example, specifically, the evaluation apparatus 210 includes a timer (not illustrated) for measuring an elapsed time from the previously executed evaluation process (first evaluation process or second evaluation process).

Then, the evaluation apparatus 210 determines the timing at which a predetermined period (for example, one year) has elapsed since the previous evaluation process and at which none of the first air conditioning apparatus 100A and the second air conditioning apparatus 100B is in operation as the timing of executing the second evaluation.

The evaluation apparatus 210 may not autonomously execute the second evaluation. The evaluation apparatus 210 may perform the second evaluation when the maintenance worker or the like of the first air conditioning apparatus 100A gives an instruction to the input unit (not illustrated) of the evaluation apparatus 210 to perform the evaluation of the first air conditioning apparatus 100A after the first evaluation process.

The processing of step S 12 to step S17 in Fig. 4B in the second evaluation is similar to the processing of step S1 to step S6 in Fig. 4A in the first evaluation. Thus, the description of the processing of steps S12 to S17 will be omitted, except for matters to be supplemented.

In step S13 in Fig. 4B, as in step S2 in Fig. 4A, the state of the space S is controlled to the target state. The target state in step S13 is preferably the same as the target state in step S2. In other words, both the first evaluation process performed at the time of installation of the first air conditioning apparatus 100A and the second evaluation process performed after the lapse of a predetermined period from the first evaluation process are preferably performed under substantially the same condition in the temperature and/or humidity of the space S. As a result of the first evaluation process and the second evaluation process being performed for under substantially the same condition in the temperature and/or humidity of the space S, it is possible to suppress the influence of the difference in the temperature and/or humidity of the space S on the evaluation of the first air conditioning apparatus 100A.

<Modification Example of Flow of Evaluation Process for First Air Conditioning Apparatus by Apparatus Evaluation System>

In the flowcharts in Fig. 4A and Fig. 4B, after operating the second air conditioning apparatus 100B and setting the state of the space S to the target state, the air conditioning control unit 214 controls the first air conditioning apparatus 100A to cause the first air conditioning apparatus 100A to start the first operation or the second operation as the first evaluation operation. However, the order in which the first air conditioning apparatus 100A and the second air conditioning apparatus 100B are operated is not limited to this order.

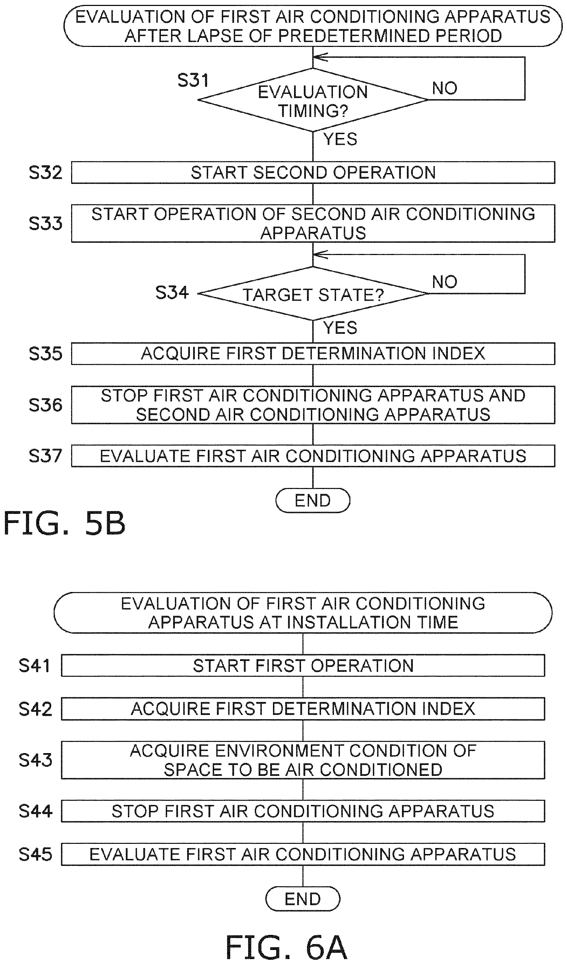

For example, as in the flowcharts in Fig. 5A and Fig. 5B, the air conditioning control unit 214 may start the operation of the second air conditioning apparatus 100B after causing the first air conditioning apparatus 100A to start the first operation or the second operation (step S21 in Fig. 5A or step S32 in Fig. 5B). Then, after the environment of the space S achieves the target state and the operating state of the first air conditioning apparatus 100A becomes the predetermined state (Yes in step S23 in Fig. 5A and step S34 in Fig. 5B), the apparatus evaluation system 200 acquires the first determination index used for the evaluation of the first air conditioning apparatus 100A. The flow of evaluation illustrated in the flowcharts in Fig. 5A and Fig. 5B is the same as the flow of evaluation described with reference to the flowcharts in Fig. 4A and Fig. 4B, except for the timings at which the operations of the first air conditioning apparatus 100A and the second air conditioning apparatus 100B are started, and the detailed description thereof will thus be omitted.

In another embodiment, the air conditioning control unit 214 may not operate the second air conditioning apparatus 100B in the first evaluation (see a flowchart in Fig. 6A). In the flowchart in Fig. 6A, in the first evaluation, the air conditioning control unit 214 starts the first operation of the first air conditioning apparatus 100A (step S41). Then, after the operating state of the first air conditioning apparatus 100A becomes the predetermined state, the apparatus evaluation system 200 acquires the first determination index used for the evaluation of the first air conditioning apparatus 100A (step S42). When the first evaluation is performed in accordance with the flowchart in Fig. 6A, the evaluation apparatus 210 preferably acquires the environment condition of the space S from the controller 60A of the first air conditioning apparatus 100A (see step S43). The environment condition of the space S includes at least one of the temperature and humidity of the space S. Since step S44 and step S45 are similar to step S5 and step S6 in Fig. 4A, the description thereof will be omitted here.

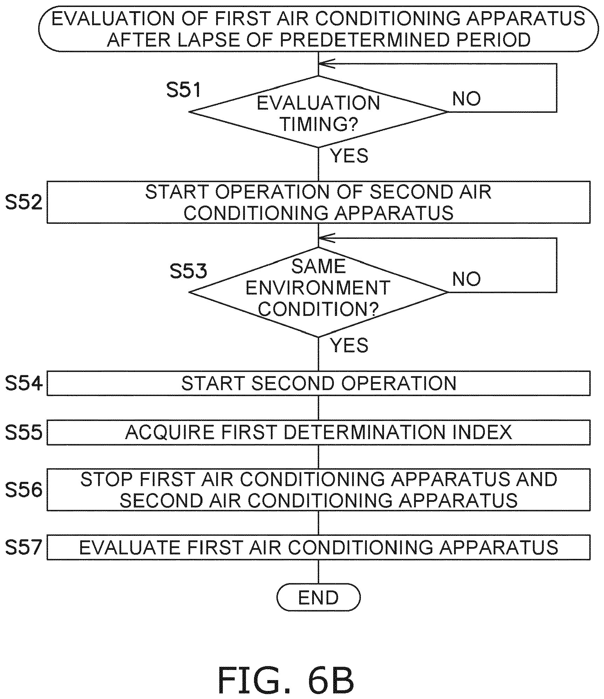

As in the flowchart in Fig. 6A, when the second air conditioning apparatus 100B is not operated in the first evaluation, the second evaluation is performed in accordance with a flowchart in Fig. 6B, for example.

If the apparatus evaluation system 200 determines that the timing of executing the second evaluation is reached (step S51), the apparatus evaluation system 200 starts the second evaluation. Specifically, the air conditioning control unit 214 of the evaluation apparatus 210 starts the operation of the second air conditioning apparatus 100B (step S52). In step S52, the air conditioning control unit 214 controls the second air conditioning apparatus 100B so as to implement the environment condition of the space S acquired in step S43 in Fig. 6A. Then, when the evaluation apparatus 210 determines that the environment condition of the space S is substantially the same as the environment condition of the space S acquired in step S43 in Fig. 6A (step S53), the air conditioning control unit 214 starts the second operation (step S54). The temperature and humidity of the space S may be acquired using the space temperature sensors 56 and the space humidity sensors 57 of the first air conditioning apparatus 100A and the second air conditioning apparatus 100B. Since the processing performed in steps S54 to S57 is similar to the processing performed in steps S14 to S17 in Fig. 4B, the description thereof will be omitted here.

Since the second evaluation is performed in the way as described in the flowchart in Fig. 6B, the first evaluation process and the second evaluation process can be performed under substantially the same condition in the temperature and/or humidity of the space S. As a result of the first evaluation process and the second evaluation process being performed under substantially the same condition in the temperature and/or humidity of the space S, it is possible to suppress the influence of the difference in the temperature and/or humidity of the space S on the evaluation of the first air conditioning apparatus 100A.

(4-2) Example Evaluation of First Air Conditioning Apparatus by Apparatus Evaluation System An example evaluation of the first air conditioning apparatus 100A by the apparatus evaluation system 200 will be described hereinafter.

(4-2-1) Evaluation of Amount of Refrigerant

An example evaluation of the amount of refrigerant of the first air conditioning apparatus 100A will be described.

First, the first evaluation operation of the first air conditioning apparatus 100A performed in the evaluation of the amount of refrigerant of the first air conditioning apparatus 100A will be described. The first operation and the second operation as the first evaluation operation performed in the evaluation of the amount of refrigerant are the same operation.

In the first evaluation operation for evaluating the amount of refrigerant, preferably, the flow direction switching mechanism 22 is controlled so that the state of the heat-source-side heat exchanger 23 is the first state in which the heat-source-side heat exchanger 23 functions as a condenser. In other words, the first evaluation operation for evaluating the amount of refrigerant is preferably performed such that the refrigerant flows through the refrigerant circuit 10 in a direction similar to that during the cooling operation.

Furthermore, in the first evaluation operation for evaluating the amount of refrigerant, the first air conditioning apparatus 100A is preferably controlled in the following way. In other words, the air conditioning control unit 214 preferably gives an instruction to the controller 60A of the first air conditioning apparatus 100A to achieve the following state. The instruction from the air conditioning control unit 214 may provide the controller 60A with a specific instruction for the operation of the various devices of the first air conditioning apparatus 100A, or provide the controller 60A with an instruction for the operating state to be achieved by the first air conditioning apparatus 100A.

In the first evaluation operation for evaluating the amount of refrigerant, the amount of air to be supplied to the heat-source-side heat exchanger 23 by the heat-source-side fan 28 is controlled so that the condensation pressure of the refrigerant in the heat-source-side heat exchanger 23 of the first air conditioning apparatus 100A has a predetermined value. In other words, in the first evaluation operation for evaluating the amount of refrigerant, the number of revolutions of the fan motor 28a is controlled so that the condensation pressure of the refrigerant in the heat-source-side heat exchanger 23 has a predetermined value. The condensation pressure of the refrigerant may be sensed using the discharge pressure sensor 30 or may be calculated from the condensation temperature Tc sensed by the heat-exchange temperature sensor 34.

Furthermore, in the first evaluation operation for evaluating the amount of refrigerant, the expansion mechanism 25 is controlled so that the degree of superheating at the outlet of the use-side heat exchanger 52 functioning as an evaporator has a positive value (> 0). The degree of superheating is calculated as, for example, the difference between the measurement value of the gas-side temperature sensor 55 and the measurement value of the liquid-side temperature sensor 54.

Furthermore, in the first evaluation operation for evaluating the amount of refrigerant, the operating capacity of the compressor 21 is controlled so that the evaporation pressure has a predetermined value. In other words, in the first evaluation operation for evaluating the amount of refrigerant, the number of revolutions of the motor 21a is controlled so that the evaporation pressure has a predetermined value. The evaporation pressure of the refrigerant may be sensed using the suction pressure sensor 31, or may be calculated from the evaporation temperature Te sensed by the liquid-side temperature sensor 54.

When the first operation or the second operation serving as the first evaluation operation is performed and the first air conditioning apparatus 100A enters the predetermined operating state (the condensation pressure, the degree of superheating, and the evaporation pressure are stabilized at the target values), the evaluation apparatus 210 acquires the degree of subcooling as a first evaluation index (step S4 in Fig. 4A or step S15 in Fig. 4B). For example, the evaluation apparatus 210 acquires, from the first air conditioning apparatus 100A, the condensation temperature Tc measured by the heat-exchange temperature sensor 34 and the temperature Tb measured by the liquid-side temperature sensor 35. Then, the evaluation apparatus 210 acquires, as a first evaluation index, the degree of subcooling SCr obtained by subtracting the temperature Tb measured by the liquid-side temperature sensor 35 from the condensation temperature Tc measured by the heat-exchange temperature sensor 34. Alternatively, the evaluation apparatus 210 may acquire, as a first evaluation index, the degree of subcooling SCr obtained by subtracting the temperature Tb measured by the liquid-side temperature sensor 35 from a value obtained by converting the discharge pressure Pd measured by the discharge pressure sensor 30 into the condensation temperature Tc.

Then, the evaluation unit 212 of the evaluation apparatus 210 evaluates the amount of refrigerant of the first air conditioning apparatus 100A based on the degree of subcooling SCr serving as the first evaluation index acquired by the evaluation apparatus 210 (step S6 in Fig. 4A or step S 17 in Fig. 4B). Specifically, when the degree of subcooling SCr is smaller than the target degree of subcooling, the evaluation unit 212 evaluates that the amount of refrigerant is insufficient. For example, in the first evaluation process performed at the time of installation of the first air conditioning apparatus 100A, the evaluation unit 212 can determine that the amount of supplied refrigerant is insufficient. For example, in the second evaluation process performed after the lapse of a predetermined period from the first evaluation process, the evaluation unit 212 can determine the leakage of the refrigerant.

If the evaluation unit 212 evaluates that the amount of refrigerant of the first air conditioning apparatus 100A is insufficient, the evaluation apparatus 210 preferably notifies the user of the first air conditioning apparatus 100A, the installation worker or maintenance worker of the first air conditioning apparatus 100A, or the like of the insufficient amount of refrigerant. For example, the evaluation apparatus 210 preferably causes a display (not illustrated) to display information notifying the insufficient amount of refrigerant. Alternatively, the evaluation apparatus 210 may notify a mobile terminal or the like held by the installation worker or maintenance worker of the first air conditioning apparatus 100A or the like of the insufficient amount of refrigerant.

(4-2-2) Evaluation of Performance

An example evaluation method for the performance of the first air conditioning apparatus 100A will be described. The evaluation of the performance of the first air conditioning apparatus 100A includes evaluation of clogging of the heat-source-side heat exchanger 23, and evaluation of clogging of the use-side heat exchanger 52 and/or evaluation of clogging of an air filter disposed in the use unit 50. The clogging of the heat exchangers 23 and 52 means a state in which it is difficult for the air supplied by the fans 28 and 53 to pass through the heat exchangers 23 and 52 because the air flow paths disposed in the heat exchangers 23 and 52 (for example, gaps between fins of the heat exchangers 23 and 52) are blocked or narrowed due to dust or the like adhering to the heat exchangers 23 and 52. The clogging of the air filter means a state in which it is difficult for the air supplied by the fan 53 to pass through the air filter due to dust or the like adhering to the air filter.

First, the first evaluation operation of the first air conditioning apparatus 100A performed in the evaluation of clogging of the heat-source-side heat exchanger 23 of the first air conditioning apparatus 100A (hereinafter referred to as heat-source-side clogging evaluation, for simplicity of description) will be described. The first operation and the second operation as the first evaluation operation performed in the heat-source-side clogging evaluation are the same operation.

In the first evaluation operation for the heat-source-side clogging evaluation, preferably, the flow direction switching mechanism 22 is controlled so that the state of the heat-source-side heat exchanger 23 becomes the first state in which the heat-source-side heat exchanger 23 functions as a condenser. In other words, the first evaluation operation for the heat-source-side clogging evaluation is preferably performed such that the refrigerant flows through the refrigerant circuit 10 in a direction similar to that during the cooling operation.

Furthermore, in the first evaluation operation for the heat-source-side clogging evaluation, the number of revolutions of the motor 21a of the compressor 21, the number of revolutions of the fan motor 28a of the heat-source-side fan 28, and the opening degree of the electronic expansion valve serving as the expansion mechanism 25 are controlled so that the degree of subcooling and the degree of superheating have positive values ($> 0$). The degree of subcooling is a value obtained by subtracting the temperature Tb of the refrigerant at the outlet of the heat-source-side heat exchanger 23 from the condensation temperature Tc. The degree of superheating is a value obtained by subtracting the evaporation temperature Te from the refrigerant temperature at the outlet of the use-side heat exchanger 52. The number of revolutions of the fan motor 28a of the heat-source-side fan 28 is preferably controlled to a predetermined value as small as possible so long as the degree of subcooling and the degree of superheating can have positive values.

Next, the first evaluation operation of the first air conditioning apparatus 100A performed in the evaluation of clogging of the use-side heat exchanger 52 and/or the air filter disposed in the use unit 50 (hereinafter referred to as use-side clogging evaluation, for simplicity of description) will be described. The first operation and the second operation as the first evaluation operation performed in the use-side clogging evaluation are the same operation.

In the first evaluation operation for the use-side clogging evaluation, preferably, the flow direction switching mechanism 22 is controlled so that the state of the heat-source-side heat exchanger 23 becomes the first state in which the heat-source-side heat exchanger 23 functions as a condenser. In other words, the first evaluation operation for the heat-source-side clogging evaluation is preferably performed such that the refrigerant flows through the refrigerant circuit 10 in a direction similar to that during the cooling operation.

Furthermore, in the first evaluation operation for the use-side clogging evaluation, the number of revolutions of the motor 21a of the compressor 21, the number of revolutions of the fan motor 28a of the heat-source-side fan 28, and the opening degree of the electronic expansion valve serving as the expansion mechanism 25 are controlled so that the degree of subcooling and the degree of superheating have positive values (> 0). The degree of subcooling is a value obtained by subtracting the temperature Tb of the refrigerant at the outlet of the heat-source-side heat exchanger 23 from the condensation temperature Tc. The degree of superheating is a value obtained by subtracting the evaporation temperature Te from the refrigerant temperature at the outlet of the use-side heat exchanger 52. The number of revolutions of the fan motor 53a of the use-side the fan 53 is preferably controlled to a relatively small predetermined value.

In the heat-source-side clogging evaluation, when the first operation or the second operation serving as the first evaluation operation is performed and the first air conditioning apparatus 100A enters the predetermined operating state (when the values of the respective state quantities become substantially constant values), the evaluation apparatus 210 acquires a first heat-exchange temperature difference and a first quantity Q1 of heat exchange as first evaluation indices. For example, when the first air conditioning apparatus 100A enters the predetermined operating state, the evaluation apparatus 210 acquires, from the first air conditioning apparatus 100A, as information, the measurement value (the discharge pressure Pd) of the discharge pressure sensor 30, the measurement value (the suction pressure Ps) of the suction pressure sensor 31, the measurement value (the suction temperature Ts) of the suction temperature sensor 32, the measurement value (the discharge temperature Td) of the discharge temperature sensor 33, the measurement value of the heat-exchange temperature sensor 34, the measurement value of the liquid-side temperature sensor 35, the measurement value of the heat-source air temperature sensor 36, and the number of revolutions N of the motor 21a of the compressor 21. Then, the evaluation apparatus 210 acquires, as a first evaluation index, a first heat-exchange temperature difference obtained by subtracting the heat-source air temperature (the measurement value of the heat-source air temperature sensor 36) from the condensation temperature (for example, the measurement value of the heat-exchange temperature sensor 34) (step S4 in Fig. 4A or step S15 in Fig. 4B). The evaluation apparatus 210 further acquires, as a first evaluation index, the first quantity Q1 of heat exchange calculated by the following equation (step S4 in Fig. 4A or step S15 in Fig. 4B).

(Equation 1)

$$Q1 = G \times \Delta hc = f(Pd, Ps, Ts, N) \times (hcin - hcout)$$

Here, G denotes the amount of refrigerant circulation in the refrigerant circuit 10, and $\Delta hc$ denotes the difference between an inlet-side enthalpy hcin of the heat-source-side heat exchanger 23 and an outlet-side enthalpy hcout of the heat-source-side heat exchanger 23. The inlet-side enthalpy hcin is calculated on the basis of the characteristics of the refrigerant and the temperature and pressure on the inlet side of the heat-source-side heat exchanger 23. The outlet-side enthalpy hcout is calculated on the basis of the characteristics of the refrigerant and the temperature and pressure on the outlet side of the heat-source-side heat exchanger 23. The function f(Pd, Ps, Ts, N) is an expression based on the characteristics and the like of the compressor 21 and is an expression for calculating the amount of refrigerant circulation G using the discharge pressure Pd, the suction pressure Ps, the suction temperature Ts, and the number of revolutions N of the motor 21a as variables.

Then, the evaluation unit 212 of the evaluation apparatus 210 evaluates the clogging on the heat source side of the first air conditioning apparatus 100A based on the first heat-exchange temperature difference and the first quantity of heat exchange Q1 serving as first evaluation indices acquired by the evaluation apparatus 210 (step S6 in Fig. 4A or step S17 in Fig. 4B). If the first quantity of heat exchange Q1 is small in view of the first heat-exchange temperature difference, the evaluation unit 212 determines that clogging has occurred in the heat-source-side heat exchanger 23. For example, if the first quantity Q1 of heat exchange is smaller than a reference value determined for the value of the first heat-exchange temperature difference, the evaluation unit 212 determines that clogging has occurred in the heat-source-side heat exchanger 23.

In the use-side clogging evaluation, when the first operation or the second operation serving as the first evaluation operation is performed and the first air conditioning apparatus 100A enters the predetermined operating state (when the values of the respective state quantities become substantially constant values), the evaluation apparatus 210 acquires a second heat-exchange temperature difference and a second quantity Q2 of heat exchange as first evaluation indices. For example, when the first air conditioning apparatus 100A enters the predetermined operating state, the evaluation apparatus 210 acquires, from the first air conditioning apparatus 100A, as information, the measurement value (the discharge pressure Pd) of the discharge pressure sensor 30, the measurement value (the suction pressure Ps) of the suction pressure sensor 31, the measurement value (the suction temperature Ts) of the suction temperature sensor 32, the measurement value of the liquid-side temperature sensor 54, the measurement value of the gas-side temperature sensor 55, the measurement value of the space air temperature sensor 56, and the number of revolutions N of the motor 21a of the compressor 21. Then, the evaluation apparatus 210 acquires, as a first evaluation index, a second heat-exchange temperature difference obtained by subtracting the evaporation temperature (for example, the evaporation temperature Te calculated from the suction pressure Ps) from the space air temperature (the measurement value of the space air temperature sensor 56) (step S4 in Fig. 4A or step S15 in Fig. 4B). The evaluation apparatus 210 further acquires, as a first evaluation index, the second quantity Q2 of heat exchange calculated by the following equation (step S4 in Fig. 4A or step S15 in Fig. 4B).

(Equation 2)

$$Q2 = G \times \Delta he = f(Pd, Ps, Ts, N) \times (heout - hein)$$

Here, G denotes the amount of refrigerant circulation in the refrigerant circuit 10, and $\Delta he$ denotes the difference between an outlet-side enthalpy heout of the use-side heat exchanger 52 and an inlet-side enthalpy hein of the use-side heat exchanger 52. The outlet-side enthalpy heout is calculated on the basis of the characteristics of the refrigerant and the temperature and pressure on the outlet side of the use-side heat exchanger 52. The inlet-side enthalpy hein is calculated on the basis of the characteristics of the refrigerant and the temperature and pressure on the inlet side of the use-side heat exchanger 52. The function f(Pd, Ps, Ts, N) is an expression based on the characteristics and the like of the compressor 21 and is an expression for calculating the amount of refrigerant circulation G using the discharge pressure Pd, the suction pressure Ps, the suction temperature Ts, and the number of revolutions N of the motor 21a as variables.

Then, the evaluation unit 212 of the evaluation apparatus 210 evaluates the clogging on the use side of the first air conditioning apparatus 100A based on the second heat-exchange temperature difference and the second quantity of heat exchange Q2 serving as first evaluation indices acquired by the evaluation apparatus 210 (step S6 in Fig. 4A or step S17 in Fig. 4B). If the second quantity of heat exchange Q2 is small in view of the second heat-exchange temperature difference, the evaluation unit 212 determines that clogging has occurred in the use-side heat exchanger 52 and/or in the air filter disposed in the use unit 50. For example, if the second quantity of heat exchange Q2 is smaller than a reference value determined for the value of the second heat-exchange temperature difference, the evaluation unit 212 determines that clogging has occurred in the use-side heat exchanger 52 and/or in the air filter disposed in the use unit 50.

If the evaluation unit 212 evaluates that clogging has occurred on the heat source side or the use side, the evaluation apparatus 210 preferably notifies the user of the first air conditioning apparatus 100A, the installation worker or maintenance worker of the first air conditioning apparatus 100A of the occurrence of clogging. For example, the evaluation apparatus 210 preferably causes the display (not illustrated) to display information notifying the occurrence of clogging on the heat source side or the use side. Alternatively, the evaluation apparatus 210 may notify a mobile terminal or the like held by the installation worker or maintenance worker of the first air conditioning apparatus 100A or the like of the occurrence of clogging on the heat source side or the use side.

(4-2-3) Evaluation of Failure

An example evaluation method for the failure of the first air conditioning apparatus 100A will be described. Here, the failure of the first air conditioning apparatus 100A means a state in which the capacity of the first air conditioning apparatus 100A is significantly lower than the capacity to be achieved by the first air conditioning apparatus 100A.

The first evaluation operation of the first air conditioning apparatus 100A performed in the evaluation of the failure of the first air conditioning apparatus 100A is, for example, a normal cooling operation for controlling the temperature of the space S to the predetermined set temperature Trs. The first evaluation operation performed in the evaluation of the failure of the first air conditioning apparatus 100A is preferably performed by stopping the second air conditioning apparatus 100B after the second air conditioning apparatus 100B adjusts the environment condition of the space S to a predetermined condition (for example, a predetermined temperature Tra higher than the set temperature Trs).

The evaluation apparatus 210 acquires, as a first evaluation index, the space temperature Tr measured by the space temperature sensor 56 of the first air conditioning apparatus 100A after a reference time t1 has elapsed since the first operation or the second operation of the first air conditioning apparatus 100A as the first evaluation operation.

Then, the evaluation unit 212 of the evaluation apparatus 210 evaluates the failure of the first air conditioning apparatus 100A based on the space temperature Tr serving as the first evaluation index. For example, if the space temperature Tr does not reach a predetermined first reference temperature X1 (the set temperature Trs < the first reference temperature X1 < the predetermined temperature Tra at the start of the first evaluation operation), the evaluation unit 212 determines that the first air conditioning apparatus 100A has failed. The evaluation unit 212 may use a different first reference temperature X1 or a different reference time t1 in accordance with the measurement value of the heat-source air temperature sensor 36 acquired by the evaluation apparatus 210. When the evaluation unit 212 determines that the first air conditioning apparatus 100A has failed, the evaluation unit 212 may further acquire various types of information from the first air conditioning apparatus 100A and determine the failed portion of the first air conditioning apparatus 100A. If the space temperature Tr reaches the first reference temperature X1, but does not reach a second reference temperature X2 (the set temperature Trs < the second reference temperature X2 < the first reference temperature X1), the evaluation unit 212 may determine that the first air conditioning apparatus 100A has not failed, but has degraded performance.

When the evaluation unit 212 evaluates that the first air conditioning apparatus 100A has failed, the evaluation apparatus 210 preferably notifies the user of the first air conditioning apparatus 100A, the installation worker or maintenance worker of the first air conditioning apparatus 100A, or the like of the failure. For example, the evaluation apparatus 210 preferably causes the display (not illustrated) to display information notifying the failure. Alternatively, the evaluation apparatus 210 may notify a mobile terminal or the like held by the installation worker or maintenance worker of the first air conditioning apparatus 100A or the like of the failure.

(5) Features

(5-1)
The apparatus evaluation system 200 according to this embodiment evaluates, among the first air conditioning apparatus 100A and the second air conditioning apparatus 100B that perform air conditioning of the space S as an example of a first space, at least the first air conditioning apparatus 100A. The apparatus evaluation system 200 includes the evaluation unit 212 as an example of a first evaluation unit, and the air conditioning control unit 214 as an example of a first air conditioning control unit. The evaluation unit 212 evaluates the first air conditioning apparatus 100A based on the predetermined first evaluation index obtained in the first evaluation operation in which the first air conditioning apparatus 100A is operated in a predetermined operating state. The air conditioning control unit 214 controls the second air conditioning apparatus 100B. The evaluation unit 212 performs a first evaluation process and a second evaluation process. In the first evaluation process, the evaluation unit 212 evaluates the first air conditioning apparatus 100A based on the first evaluation index obtained in the first operation performed as the first evaluation operation at the time of installation of the first air conditioning apparatus 100A. In the second evaluation process, the evaluation unit 212 evaluates the first air conditioning apparatus 100A based on the first evaluation index obtained in the second operation performed as the first evaluation operation after the first evaluation process. The air conditioning control unit 214 operates the second air conditioning apparatus 100B before at least one of the first operation and the second operation of the first air conditioning apparatus 100A is performed and/or while at least one of the first operation and the second operation of the first air conditioning apparatus 100A is being performed.

In the apparatus evaluation system 200 according to this embodiment, the conditions of the thermal load at the time of evaluation in the initial stage of installation of the first air conditioning apparatus 100A and the conditions of the thermal load at the time of evaluation after a lapse of time from the installation of the first air conditioning apparatus 100A can be brought close to each other, and the first air conditioning apparatus 100A can be accurately evaluated.

(5-2)
In the apparatus evaluation system 200 according to this embodiment, the evaluation of the first air conditioning apparatus 100A includes at least one of evaluation of the amount of refrigerant, evaluation of the performance, and evaluation of the failure of the first air conditioning apparatus 100A.

The apparatus evaluation system 200 according to this embodiment can perform accurate evaluation for various contents of evaluation.

(5-3)
In the apparatus evaluation system 200 according to this embodiment, the air conditioning control unit 214 operates the second air conditioning apparatus 100B before at least one of the first operation and the second operation of the first air conditioning apparatus 100A is performed and/or while at least one of the first operation and the second operation of the first air conditioning apparatus 100A is being performed to bring the temperature of the space S close to a target temperature and/or bring the humidity of the space S close to a target humidity.

In the apparatus evaluation system 200 according to this embodiment, the temperature or humidity of the space S at the time of evaluation in the initial stage of installation of the first air conditioning apparatus 100A and the temperature or humidity of the space S at the time of evaluation after a lapse of time from the installation of the first air conditioning apparatus 100A can be brought close to each other, and the first air conditioning apparatus 100A can be accurately evaluated.

(5-4)
In the apparatus evaluation system 200 according to this embodiment, the second evaluation process is repeatedly performed when a first period has elapsed since the first evaluation process and when the first period has elapsed since the second evaluation process previously performed.

In this apparatus evaluation system 200, the first air conditioning apparatus 100A can be periodically evaluated with high accuracy.

(5-5)
In the apparatus evaluation system 200 according to this embodiment, the evaluation unit 212 as an example of the second evaluation unit evaluates the second air conditioning apparatus 100B based on the predetermined second evaluation index obtained in the second evaluation operation in which the second air conditioning apparatus 100B is operated in a predetermined operating state. Similarly to the evaluation of the first air conditioning apparatus 100A, the evaluation of the second air conditioning apparatus 100B preferably includes at least one of evaluation of the amount of refrigerant, evaluation of the performance, and evaluation of the failure of the second air conditioning apparatus 100B.

The air conditioning control unit 214 as an example of a second air conditioning control unit controls the first air conditioning apparatus 100A. The evaluation unit 212 performs the third evaluation process and the fourth evaluation process. In the third evaluation process, the evaluation unit 212 evaluates the second air conditioning apparatus 100B based on the second evaluation index obtained in the third operation performed as the second evaluation operation at the time of installation of the second air conditioning apparatus 100B. In the fourth evaluation process, the evaluation unit 212 evaluates the second air conditioning apparatus 100B based on the second evaluation index obtained in the fourth operation performed as the second evaluation operation after the third evaluation process. The air conditioning control unit 214 operates the first air conditioning apparatus 100A before at least one of the third operation and the fourth operation of the second air conditioning apparatus 100B is performed and/or while at least one of the third operation and the fourth operation of the second air conditioning apparatus 100B is being performed.

In the apparatus evaluation system 200 according to this embodiment, also for the second air conditioning apparatus 100B, the conditions of the thermal load at the time of evaluation in the initial stage of installation of the apparatus and the conditions of the thermal load at the time of evaluation after a lapse of time from the installation of the apparatus can be brought close to each other, and the air conditioning apparatus can be accurately evaluated.

In this embodiment, the evaluation unit 212 functions as the second evaluation unit, and the air conditioning control unit 214 functions as the second air conditioning control unit. However, the present invention is not limited to this embodiment. The evaluation apparatus 210 may include a second evaluation unit separate from the evaluation unit 212, and may include a second air conditioning control unit separate from the air conditioning control unit 214.

(5-6)

An apparatus evaluation method according to this embodiment is an apparatus evaluation method for evaluating, among the first air conditioning apparatus 100A and the second air conditioning apparatus 100B that perform air conditioning of the space S, at least the first air conditioning apparatus 100A. The apparatus evaluation method includes a first evaluation step (step S6 in Fig. 4A in the embodiment described above), a second evaluation step (step S17 in Fig. 4B in the embodiment described above), and an air conditioning control step (step S1 in Fig. 4A and step S12 in Fig. 4B in the embodiment described above). In the first evaluation step, at the time of installation of the first air conditioning apparatus 100A, the first air conditioning apparatus 100A is evaluated based on the first evaluation index obtained in the first operation in which the first air conditioning apparatus 100A is operated in a predetermined operating state. In the second evaluation step, the first air conditioning apparatus 100A is evaluated based on the first evaluation index obtained in the second operation in which the first air conditioning apparatus 100A is operated in a predetermined operating state after the first evaluation step. In the air conditioning control step, the second air conditioning apparatus 100B is operated before at least one of the first operation and the second operation of the first air conditioning apparatus 100A is performed and/or while at least one of the first operation and the second operation of the first air conditioning apparatus 100A is being performed.

In the apparatus evaluation method according to this embodiment, the conditions of the thermal load at the time of evaluation in the initial stage of installation of the first air conditioning apparatus 100A and the conditions of the thermal load at the time of evaluation after a lapse of time from the installation of the first air conditioning apparatus 100A can be brought close to each other, and the first air conditioning apparatus 100A can be accurately evaluated.

(6) Modifications

(6-1) Modification A

The apparatus evaluation system 200 may be configured to perform only evaluation of only one of the first air conditioning apparatus 100A and the second air conditioning apparatus 100B. At this time, the first air conditioning apparatus 100A or the second air conditioning apparatus 100B that is not the evaluation target may be an electric heater, a boiler, an adsorption dehumidifier, or a humidifier that adjusts the temperature or humidity of the space S.

**REFERENCE SIGNS LIST**

50        use unit
100A      first air conditioning apparatus (first air conditioning apparatus)

100B    second air conditioning apparatus (second air conditioning apparatus)
200     apparatus evaluation system
212     evaluation unit (first evaluation unit, second evaluation unit)
214     air conditioning control unit (first air conditioning control unit, second air conditioning control unit)
S       space (first space)

Citation List

Patent Literature

PTL 1: Japanese Patent No. 5334909

**Claims**

1.  An apparatus evaluation system (200) for evaluating, among a first air conditioning apparatus (100A) and a second air conditioning apparatus (100B) the first air conditioning apparatus (100A) and the second air conditioning apparatus (100B) being configured to perform air conditioning of a first space (S), at least the first air conditioning apparatus, comprising:

    a first evaluation unit (212) that evaluates the first air conditioning apparatus based on a predetermined first evaluation index obtained in a first evaluation operation in which the first air conditioning apparatus is operated in a predetermined operating state; and
    a first air conditioning control unit (214) that controls the second air conditioning apparatus, wherein
    the first evaluation unit performs a first evaluation process for evaluating the first air conditioning apparatus based on the first evaluation index obtained in a first operation performed as the first evaluation operation at a time of installation of the first air conditioning apparatus, and a second evaluation process for evaluating the first air conditioning apparatus based on the first evaluation index obtained in a second operation performed as the first evaluation operation after the first evaluation process, and
    **characterized in that**, the first air conditioning control unit operates the second air conditioning apparatus before at least one of the first operation and the second operation of the first air conditioning apparatus is performed and/or while at least one of the first operation and the second operation of the first air conditioning apparatus is being performed, so that the conditions of the thermal load at the time of evaluation in the initial stage of installation of the first air conditioning apparatus and the conditions of the thermal load at the time of evaluation after a lapse of time from the installation of the first air conditioning apparatus can be brought close to each other,

    the first air conditioning apparatus (100A) including a first heat source unit (20), a first use unit (50), a first liquid-refrigerant connection pipe (2), a first gas-refrigerant connection pipe (4), a first controller for controlling the first heat source unit (20) and the first use unit (50), and the second air conditioning apparatus (100B) including a second heat source unit (20) that is different from the first heat source unit (20), a second use unit (50), a second liquid-refrigerant connection pipe (2), a second gas-refrigerant connection pipe (4), a second controller for controlling the second heat source unit (20) and the second use unit (50)

2.  The apparatus evaluation system according to Claim 1, wherein
    the evaluation of the first air conditioning apparatus includes at least one of evaluation of an amount of refrigerant, evaluation of a performance, and evaluation of a failure of the first air conditioning apparatus.

3.  The apparatus evaluation system according to Claim 1 or 2, wherein
    the first air conditioning control unit operates the second air conditioning apparatus before at least one of the first operation and the second operation of the first air conditioning apparatus is performed and/or while at least one of the first operation and the second operation of the first air conditioning apparatus is being performed to bring a temperature of the first space close to a target temperature and/or bring a humidity of the first space close to a target humidity.

4.  The apparatus evaluation system according to any one of Claims 1 to 3, wherein
    the first air conditioning apparatus and the second air conditioning apparatus are vapor compression air conditioning apparatuses each having a use unit (50) installed in the first space.

5. The apparatus evaluation system according to any one of Claims 1 to 4, wherein
the second evaluation process is repeatedly performed when a first period has elapsed since the first evaluation process and when the first period has elapsed since the second evaluation process previously performed.

6. The apparatus evaluation system according to any one of Claims 1 to 5, comprising:

a second evaluation unit (212) that evaluates the second air conditioning apparatus based on a predetermined second evaluation index obtained in a second evaluation operation in which the second air conditioning apparatus is operated in a predetermined operating state; and
a second air conditioning control unit (214) that controls the first air conditioning apparatus, wherein
the second evaluation unit performs a third evaluation process for evaluating the second air conditioning apparatus based on the second evaluation index obtained in a third operation performed as the second evaluation operation at a time of installation of the second air conditioning apparatus, and a fourth evaluation process for evaluating the second air conditioning apparatus based on the second evaluation index obtained in a fourth operation performed as the second evaluation operation after the third evaluation process, and
the second air conditioning control unit operates the first air conditioning apparatus before at least one of the third operation and the fourth operation of the second air conditioning apparatus is performed and/or while at least one of the third operation and the fourth operation of the second air conditioning apparatus is being performed.

7. An apparatus evaluation method for evaluating, among a first air conditioning apparatus (100A) and a second air conditioning apparatus (100B), the first air conditioning apparatus (100A) and the second air conditioning apparatus (100B) being configured to perform air conditioning of a first space (S), at least the first air conditioning apparatus, comprising:

a first evaluation step (S6) of evaluating the first air conditioning apparatus based on a first evaluation index obtained in a first operation in which the first air conditioning apparatus is operated in a predetermined operating state at a time of installation of the first air conditioning apparatus;
a second evaluation step (S 17) of evaluating the first air conditioning apparatus based on the first evaluation index obtained in a second operation in which the first air conditioning apparatus is operated in the predetermined operating state after the first evaluation step; **characterized in that** the method comprises an air conditioning control step (S 1, S12, S22, S33, S52) of operating the second air conditioning apparatus before at least one of the first operation and the second operation of the first air conditioning apparatus is performed and/or while at least one of the first operation and the second operation of the first air conditioning apparatus is being performed, so that the conditions of the thermal load at the time of evaluation in the initial stage of installation of the first air conditioning apparatus and the conditions of the thermal load at the time of evaluation after a lapse of time from the installation of the first air conditioning apparatus can be brought close to each other,

the first air conditioning apparatus (100A) including a first heat source unit (20), a first use unit (50), a first liquid-refrigerant connection pipe (2), a first gas-refrigerant connection pipe (4), a first controller for controlling the first heat source unit (20) and the first use unit (50), and the second air conditioning apparatus (100B) including a second heat source unit (20) that is different from the first heat source unit (20), a second use unit (50), a second liquid-refrigerant connection pipe (2), a second gas-refrigerant connection pipe (4), a second controller for controlling the second heat source unit (20) and the second use unit (50).

## Patentansprüche

1. Gerätebewertungssystem (200) zum Bewerten zwischen einem ersten Klimagerät (100A) und einem zweiten Klimagerät (100B), wobei das erste Klimagerät (100A) und das zweite Klimagerät (100B) ausgelegt sind, um eine Klimatisierung eines ersten Raums (S) durchzuführen, mindestens des ersten Klimageräts, umfassend:

eine erste Bewertungseinheit (212), die das erste Klimagerät basierend auf einem vorbestimmten ersten Bewertungsindex bewertet, der in einem ersten Bewertungsbetrieb erhalten wird, in dem das erste Klimagerät in einem vorbestimmten Betriebszustand betrieben wird; und
eine erste Klimasteuereinheit (214), die das zweite Klimagerät steuert, wobei
die erste Bewertungseinheit einen ersten Bewertungsprozess zum Bewerten des ersten Klimageräts basierend auf dem ersten Bewertungsindex, der in einem ersten Betrieb erhalten wird, der als erster Bewertungsbetrieb zum Zeitpunkt der Installation des ersten Klimageräts durchgeführt wurde, und einen zweiten Bewertungsprozess zum Bewerten des ersten Klimageräts basierend auf dem ersten Bewertungsindex, der in einem zweiten Betrieb erhalten wird, der als erster Bewertungsbetrieb nach dem ersten Bewertungsprozess durchgeführt wurde, durchführt, und

**dadurch gekennzeichnet, dass** die erste Klimasteuereinheit das zweite Klimagerät betreibt, bevor mindestens einer zwischen dem ersten Betrieb und dem zweiten Betrieb des ersten Klimageräts durchgeführt wird und/oder während mindestens einer zwischen dem ersten Betrieb und dem zweiten Betrieb des ersten Klimageräts durchgeführt wird, so dass die Bedingungen der thermischen Belastung zum Zeitpunkt der Bewertung in der Anfangsphase der Installation des ersten Klimageräts und

die Bedingungen der thermischen Belastung zum Zeitpunkt der Bewertung nach einem Zeitablauf von der Installation des ersten Klimageräts nahe beieinander gebracht werden können,

wobei das erste Klimagerät (100A) eine erste Wärmequelleneinheit (20), eine erste Nutzungseinheit (50), eine erste Flüssigkältemittel-Verbindungsleitung (2), eine erste Gaskältemittel-Verbindungsleitung (4), eine erste Steuerung zum Steuern der ersten Wärmequelleneinheit (20) und der ersten Nutzungseinheit (50) einschließt, und das zweite Klimagerät (100B) eine zweite Wärmequelleneinheit (20), die sich von der ersten Wärmequelleneinheit (20) unterscheidet, eine zweite Nutzungseinheit (50), eine zweite Flüssigkältemittel-Verbindungsleitung (2), eine zweite Gaskältemittel-Verbindungsleitung (4), eine zweite Steuerung zum Steuern der zweiten Wärmequelleneinheit (20) und der zweiten Nutzungseinheit (50) einschließt.

2. Gerätebewertungssystem nach Anspruch 1, wobei das Bewerten des ersten Klimageräts mindestens eines unter Bewerten einer Kältemittelmenge, Bewerten einer Leistung und Bewerten eines Ausfalls des ersten Klimageräts einschließt.

3. Gerätebewertungssystem nach Anspruch 1 oder 2, wobei die erste Klimasteuereinheit das zweite Klimagerät betreibt, bevor mindestens einer zwischen dem ersten Betrieb und dem zweiten Betrieb des ersten Klimageräts durchgeführt wird und/oder während mindestens einer zwischen dem ersten Betrieb und dem zweiten Betrieb des ersten Klimageräts durchgeführt wird, um eine Temperatur des ersten Raums nahe an eine Zieltemperatur zu bringen und/oder eine Feuchtigkeit des ersten Raums nahe an eine Zielfeuchtigkeit zu bringen.

4. Gerätebewertungssystem nach einem der Ansprüche 1 bis 3, wobei das erste Klimagerät und das zweite Klimagerät Dampfkompressionsklimageräte sind, die jeweils eine Nutzungseinheit (50) aufweisen, die im ersten Raum installiert ist.

5. Gerätebewertungssystem nach einem der Ansprüche 1 bis 4, wobei der zweite Bewertungsprozess wiederholt durchgeführt wird, wenn eine erste Periode seit dem ersten Bewertungsprozess verstrichen ist und wenn die erste Periode seit dem zuvor durchgeführten zweiten Bewertungsprozess verstrichen ist.

6. Gerätebewertungssystem nach einem der Ansprüche 1 bis 5, umfassend:

eine zweite Bewertungseinheit (212), die das zweite Klimagerät basierend auf einem vorbestimmten zweiten Bewertungsindex bewertet, der in einem zweiten Bewertungsbetrieb erhalten wird, in dem das zweite Klimagerät in einem vorbestimmten Betriebszustand betrieben wird; und eine zweite Klimasteuereinheit (214), die das erste Klimagerät steuert, wobei die zweite Bewertungseinheit einen dritten Bewertungsprozess zum Bewerten des zweiten Klimageräts basierend auf dem zweiten Bewertungsindex, der in einem dritten Betrieb erhalten wird, der als zweiter Bewertungsbetrieb zum Zeitpunkt der Installation des zweiten Klimageräts durchgeführt wurde, und einen vierten Bewertungsprozess zum Bewerten des zweiten Klimageräts basierend auf dem zweiten Bewertungsindex durchführt, der in einem vierten Betrieb erhalten wird, der als zweiter Bewertungsbetrieb nach dem dritten Bewertungsprozess durchgeführt wurde, durchführt und die zweite Klimasteuereinheit das erste Klimagerät betreibt, bevor mindestens einer zwischen dem dritten Betrieb und dem vierten Betrieb des ersten Klimageräts durchgeführt wird und/oder während mindestens einer zwischen dem dritten Betrieb und dem vierten Betrieb des ersten Klimageräts durchgeführt wird.

7. Gerätebewertungsverfahren zum Bewerten zwischen einem ersten Klimagerät (100A) und einem zweiten Klimagerät (100B), wobei das erste Klimagerät (100A) und das zweite Klimagerät (100B) ausgelegt sind, um eine Klimatisierung eines ersten Raums (S) durchzuführen, mindestens des ersten Klimageräts, umfassend:

einen ersten Bewertungsschritt (S6) zum Bewerten des ersten Klimageräts basierend auf einem ersten Bewertungsindex, der in einem ersten Betrieb erhalten wird, in dem das erste Klimagerät in einem vorbestimmten Betriebszustand zum Zeitpunkt der Installation des ersten Klimageräts betrieben wird;

einen zweiten Bewertungsschritt (S17) zum Bewerten des ersten Klimageräts basierend auf dem ersten Bewertungsindex, der in einem zweiten Betrieb erhalten wird, in dem das erste Klimagerät nach dem ersten Bewertungsschritt in dem vorbestimmten Betriebszustand betrieben wird; **dadurch gekennzeichnet, dass** das Verfahren einen Klimasteuerschritt (S1, S12, S22, S33, S52) zum Betreiben des zweiten Klimageräts umfasst, bevor mindestens einer zwischen dem ersten Betrieb und dem zweiten Betrieb des ersten Klimageräts durchgeführt wird und/oder während mindestens einer zwischen dem ersten Betrieb und dem zweiten Betrieb des ersten Klimageräts durchgeführt wird, so dass die Bedingungen der thermischen Belastung zum Zeitpunkt der Bewertung in der Anfangsphase der Installation des ersten Klimageräts und die Bedingungen der thermischen Belastung zum Zeitpunkt der Bewertung nach einem Zeitablauf von der Installation des ersten Klimageräts nahe beieinander gebracht werden können,

wobei das erste Klimagerät (100A) eine erste Wärmequelleneinheit (20), eine erste Nutzungseinheit (50), eine erste Flüssigkältemittel-Verbindungsleitung (2), eine erste Gaskältemittel-Verbindungsleitung (4), eine erste Steuerung zum Steuern der ersten Wärmequelleneinheit (20) und der ersten Nutzungseinheit (50) einschließt, und das zweite Klimagerät (100B) eine zweite Wärmequelleneinheit (20), die sich von der ersten Wärmequelleneinheit (20) unterscheidet, eine zweite Nutzungseinheit (50), eine zweite Flüssigkältemittel-Verbindungsleitung (2), eine zweite Gaskältemittel-Verbindungsleitung (4), eine zweite Steuerung zum Steuern der zweiten Wärmequelleneinheit (20) und der zweiten Nutzungseinheit (50) einschließt.

**Revendications**

1. Système d'évaluation d'appareil (200) pour évaluer, parmi un premier appareil de climatisation (100A) et un deuxième appareil de climatisation (100B), le premier appareil de climatisation (100A) et le deuxième appareil de climatisation (100B) étant configurés pour effectuer la climatisation d'un premier espace (S), au moins le premier appareil de climatisation, comprenant :

une première unité d'évaluation (212) qui évalue le premier appareil de climatisation sur la base d'un premier indice d'évaluation prédéterminé obtenu lors d'une première opération d'évaluation au cours de laquelle le premier appareil de climatisation est utilisé dans un état de fonctionnement prédéterminé ; et

une première unité de commande de climatisation (214) qui commande le deuxième appareil de climatisation, dans lequel

la première unité d'évaluation effectue un premier processus d'évaluation pour évaluer le premier appareil de climatisation sur la base du premier indice d'évaluation obtenu lors d'une première opération effectuée en tant que première opération d'évaluation au moment de l'installation du premier appareil de climatisation, et un deuxième processus d'évaluation pour évaluer le premier appareil de climatisation sur la base du premier indice d'évaluation obtenu lors d'une deuxième opération effectuée en tant que première opération d'évaluation après le premier processus d'évaluation, et

**caractérisé en ce que** la première unité de commande de climatisation fait fonctionner le deuxième appareil de climatisation avant qu'au moins une opération entre la première opération et la deuxième opération du premier appareil de climatisation soit effectuée et/ou pendant qu'au moins une opération entre la première opération et

de la deuxième opération du premier appareil de climatisation est effectuée, de sorte que les conditions de la charge thermique au moment de l'évaluation dans la phase initiale de l'installation du premier appareil de climatisation et les conditions de la charge thermique au moment de l'évaluation après un certain temps à partir de l'installation du premier appareil de climatisation peuvent être rapprochées l'une de l'autre,

le premier appareil de climatisation (100A) incluant une première unité de source de chaleur (20), une première unité d'utilisation (50), un premier tuyau de raccordement de réfrigérant liquide (2), un premier tuyau de raccordement de réfrigérant gazeux (4), un premier contrôleur pour contrôler la première unité de source de chaleur (20) et la première unité d'utilisation (50), et le deuxième appareil de climatisation (100B) incluant une deuxième unité de source de chaleur (20) différente de la première unité de source de chaleur (20), une deuxième unité d'utilisation (50), un deuxième tuyau de raccordement de réfrigérant liquide (2), un deuxième tuyau de raccordement de réfrigérant gazeux (4), un deuxième contrôleur pour contrôler la deuxième unité de source de chaleur (20) et la deuxième unité d'utilisation (50).

2. Système d'évaluation d'appareil selon la revendication 1, dans lequel

l'évaluation du premier appareil de climatisation inclut au moins l'évaluation d'une quantité de réfrigérant, l'évaluation d'une performance et l'évaluation d'une défaillance du premier appareil de climatisation.

3. Système d'évaluation d'appareil selon la revendication 1 ou 2, dans lequel
la première unité de commande de climatisation fait fonctionner le deuxième appareil de climatisation avant qu'au moins une opération entre la première opération et la deuxième opération du premier appareil de climatisation ne soit effectuée et/ou pendant qu'au moins une opération entre la première opération et la deuxième opération du premier appareil de climatisation est en cours d'exécution afin de rapprocher la température du premier espace d'une température cible et/ou de rapprocher l'humidité du premier espace d'un taux d'humidité cible.

4. Système d'évaluation d'appareil selon l'une quelconque des revendications 1 à 3, dans lequel le premier appareil de climatisation et le deuxième appareil de climatisation sont des appareils de climatisation à compression de vapeur comportant chacun une unité d'utilisation (50) installée dans le premier espace.

5. Système d'évaluation d'appareil selon l'une quelconque des revendications 1 à 4, dans lequel le deuxième processus d'évaluation est exécuté de manière répétée lorsqu'une première période s'est écoulée depuis le premier processus d'évaluation et lorsque la première période s'est écoulée depuis le deuxième processus d'évaluation exécuté précédemment.

6. Système d'évaluation d'appareil selon l'une quelconque des revendications 1 à 5, comprenant :

une deuxième unité d'évaluation (212) qui évalue le deuxième appareil de climatisation sur la base d'un deuxième indice d'évaluation prédéterminé obtenu lors d'une deuxième opération d'évaluation au cours de laquelle le deuxième appareil de climatisation est utilisé dans un état de fonctionnement prédéterminé ; et une deuxième unité de commande de climatisation (214) qui commande le premier appareil de climatisation, dans lequel la deuxième unité d'évaluation effectue un troisième processus d'évaluation pour évaluer le deuxième appareil de climatisation sur la base du deuxième indice d'évaluation obtenu lors d'une troisième opération effectuée en tant que deuxième opération d'évaluation au moment de l'installation du deuxième appareil de climatisation, et un quatrième processus d'évaluation pour évaluer le deuxième appareil de climatisation sur la base du deuxième indice d'évaluation obtenu lors d'une quatrième opération effectuée en tant que deuxième opération d'évaluation après le troisième processus d'évaluation, et
la deuxième unité de commande de climatisation fait fonctionner le premier appareil de climatisation avant qu'au moins l'une des troisième et quatrième opérations du deuxième appareil de climatisation ne soit effectuée et/ou pendant qu'au moins l'une des troisième et quatrième opérations du deuxième appareil de climatisation est en cours d'exécution.

7. Procédé d'évaluation d'appareil pour évaluer, parmi un premier appareil de climatisation (100A) et un deuxième appareil de climatisation (100B), le premier appareil de climatisation (100A) et le deuxième appareil de climatisation (100B) étant configurés pour effectuer la climatisation d'un premier espace (S), au moins le premier appareil de climatisation, comprenant :

une première étape d'évaluation (S6) consistant à évaluer le premier appareil de climatisation sur la base d'un premier indice d'évaluation obtenu lors d'une première opération au cours de laquelle le premier appareil de climatisation est utilisé dans un état de fonctionnement prédéterminé au moment de l'installation du premier appareil de climatisation ;
une deuxième étape d'évaluation (S17) consistant à évaluer le premier appareil de climatisation sur la base du premier indice d'évaluation obtenu lors d'une deuxième opération au cours de laquelle le premier appareil de climatisation est utilisé dans l'état de fonctionnement prédéterminé après la première étape d'évaluation ; **caractérisé en ce que** le procédé comprend une étape de commande de climatisation (S1, S12, S22, S33, S52) consistant à faire fonctionner le deuxième appareil de climatisation avant qu'au moins une opération entre la première opération et la deuxième opération du premier appareil de climatisation soit effectuée et/ou pendant l'exécution d'au moins une opération entre la première opération et la deuxième opération du premier appareil de climatisation, de sorte que les conditions de la charge thermique au moment de l'évaluation dans la phase initiale de l'installation du premier appareil de climatisation et les conditions de la charge thermique au moment de l'évaluation après un certain temps à partir de l'installation du premier appareil de climatisation peuvent être rapprochées l'une de l'autre,
le premier appareil de climatisation (100A) incluant une première unité de source de chaleur (20), une première unité d'utilisation (50), un premier tuyau de raccordement de réfrigérant liquide (2), un premier tuyau de raccordement de réfrigérant gazeux (4), un premier contrôleur pour contrôler la première unité de source de chaleur (20) et la première unité d'utilisation (50), et le deuxième appareil de climatisation (100B) incluant une deuxième unité de source de chaleur (20) différente de la première unité de source de chaleur (20), une deuxième unité d'utilisation (50), un deuxième tuyau de raccordement de réfrigérant liquide (2), un deuxième tuyau de raccordement de réfrigérant gazeux (4), un deuxième contrôleur pour contrôler la deuxième unité de source de chaleur (20) et la deuxième unité d'utilisation (50).

FIG. 1

FIG. 2

200

| 210 | EVALUATION APPARATUS | | FIRST AIR CONDITIONING APPARATUS | 100A |
| 212 | EVALUATION UNIT | | CONTROLLER | 60A |
| 214 | AIR CONDITIONING CONTROL UNIT | | SECOND AIR CONDITIONING APPARATUS | 100B |
| | | | CONTROLLER | 60B |

# FIG. 3

EVALUATION OF FIRST AIR CONDITIONING APPARATUS AT INSTALLATION TIME

S1 START OPERATION OF SECOND AIR CONDITIONING APPARATUS

S2 TARGET STATE? — NO

YES

S3 START FIRST OPERATION

S4 ACQUIRE FIRST DETERMINATION INDEX

S5 STOP FIRST AIR CONDITIONING APPARATUS AND SECOND AIR CONDITIONING APPARATUS

S6 EVALUATE FIRST AIR CONDITIONING APPARATUS

END

# FIG. 4A

EVALUATION OF FIRST AIR CONDITIONING APPARATUS
AFTER LAPSE OF PREDETERMINED PERIOD

S11 — EVALUATION TIMING? — NO

YES

S12 — START OPERATION OF SECOND AIR CONDITIONING APPARATUS

S13 — TARGET STATE? — NO

YES

S14 — START SECOND OPERATION

S15 — ACQUIRE FIRST DETERMINATION INDEX

S16 — STOP FIRST AIR CONDITIONING APPARATUS AND SECOND AIR CONDITIONING APPARATUS

S17 — EVALUATE FIRST AIR CONDITIONING APPARATUS

END

FIG. 4B

EVALUATION OF FIRST AIR CONDITIONING
APPARATUS AT INSTALLATION TIME

S21 — START FIRST OPERATION

S22 — START OPERATION OF SECOND AIR CONDITIONING APPARATUS

S23 — TARGET STATE? — NO

YES

S24 — ACQUIRE FIRST DETERMINATION INDEX

S25 — STOP FIRST AIR CONDITIONING APPARATUS AND SECOND AIR CONDITIONING APPARATUS

S26 — EVALUATE FIRST AIR CONDITIONING APPARATUS

END

FIG. 5A

EVALUATION OF FIRST AIR CONDITIONING APPARATUS
AFTER LAPSE OF PREDETERMINED PERIOD

S31     EVALUATION
TIMING?     NO

YES

S32    START SECOND OPERATION

S33    START OPERATION OF SECOND AIR CONDITIONING
APPARATUS

S34    TARGET STATE?    NO

YES

S35    ACQUIRE FIRST DETERMINATION INDEX

S36    STOP FIRST AIR CONDITIONING APPARATUS AND
SECOND AIR CONDITIONING APPARATUS

S37    EVALUATE FIRST AIR CONDITIONING APPARATUS

END

# FIG. 5B

EVALUATION OF FIRST AIR CONDITIONING
APPARATUS AT INSTALLATION TIME

S41    START FIRST OPERATION

S42    ACQUIRE FIRST DETERMINATION INDEX

S43    ACQUIRE ENVIRONMENT CONDITION OF
SPACE TO BE AIR CONDITIONED

S44    STOP FIRST AIR CONDITIONING APPARATUS

S45    EVALUATE FIRST AIR CONDITIONING APPARATUS

END

# FIG. 6A

EVALUATION OF FIRST AIR CONDITIONING APPARATUS
AFTER LAPSE OF PREDETERMINED PERIOD

S51 — EVALUATION TIMING? — NO

YES

S52 — START OPERATION OF SECOND AIR CONDITIONING APPARATUS

S53 — SAME ENVIRONMENT CONDITION? — NO

YES

S54 — START SECOND OPERATION

S55 — ACQUIRE FIRST DETERMINATION INDEX

S56 — STOP FIRST AIR CONDITIONING APPARATUS AND SECOND AIR CONDITIONING APPARATUS

S57 — EVALUATE FIRST AIR CONDITIONING APPARATUS

END

# FIG. 6B

**EP 3 943 824 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5334909 B

- EP 2682685 A2